# EUROPEAN PATENT SPECIFICATION

(11) **EP 3 522 469 B1**
(45) Date of publication and mention of the grant of the patent: **12.10.2022**
(21) Application number: 17854931.7
(22) Date of filing: 28.09.2017
(51) Int. Cl.: H04L 27/26, H04L 5/00, H04W 56/00

(54) **METHODS AND DEVICES FOR TRANSMITTING AND RECEIVING DATA**
VERFAHREN UND VORRICHTUNGEN ZUM ÜBERTRAGEN UND EMPFANGEN VON DATEN
PROCÉDÉS ET APPAREILS DE TRANSMISSION ET DE RÉCEPTION DE DONNÉES

(30) Priority: 28.09.2016 CN 201610859514
(43) Date of publication of application: 07.08.2019
(73) Proprietor: ZTE Corporation, Shenzhen, Guangdong 518057 (CN)
(72) Inventor: CHEN, Donglei, Shenzhen Guangdong 518057 (CN); HAO, Peng, Shenzhen Guangdong 518057 (CN); XIA, Shuqiang, Shenzhen Guangdong 518057 (CN); ZUO, Zhisong, Shenzhen Guangdong 518057 (CN); ZHANG, Junfeng, Shenzhen Guangdong 518057 (CN)
(74) Representative: Aipex B.V.
(86) International application number: PCT/CN2017/103963
(87) International publication number: WO 2018/059481

(56) References cited:
- CN-A- 101 572 577
- CN-A- 102 307 167
- CN-A- 103 648 170
- CN-A- 104 115 535
- US-A1- 2011 044 188
- US-A1- 2012 281 566
- US-A1- 2014 219 267
- HUAWEI ET AL: "Discussion on HD-FDD operation of low cost MTC UEs", 3GPP DRAFT; R1-141942, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050787539, Retrieved from the Internet: URL:http://www.3gpp.org/ftp/Meetings_3GPP_ SYNC/RAN1/Docs/ [retrieved on 2014-05-18]

## Description

### TECHNICAL FIELD

The present invention relates to communications and, in particular, to methods and devices for transmitting and receiving data.

### BACKGROUND

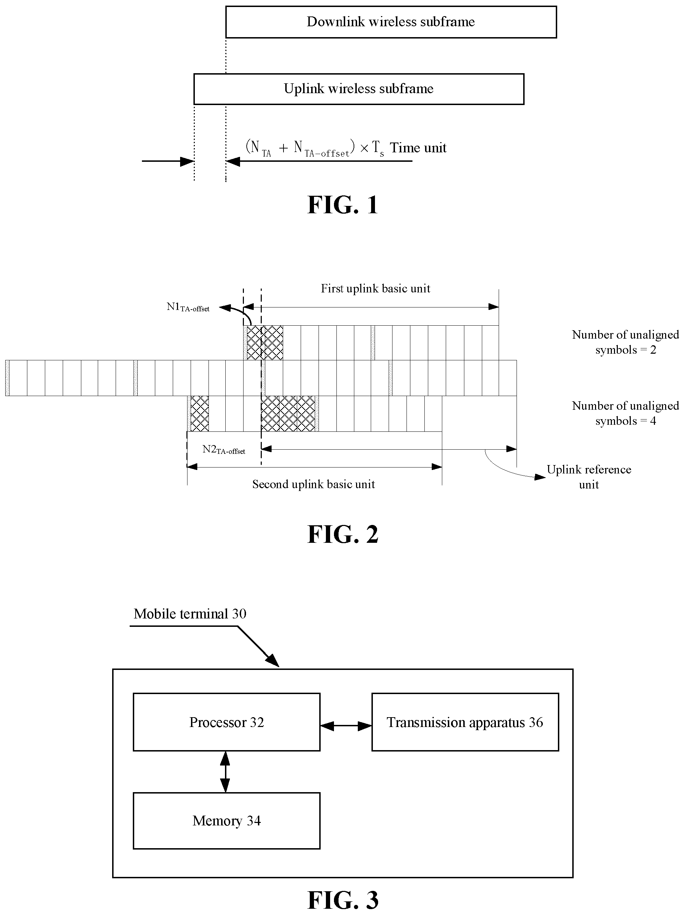

In long term evolution (LTE) standards, when frequency division duplex (FDD) and time division duplex (TDD) systems perform a timing description, a fixed timing advance offset N_{TA-offset} is introduced. As shown in FIG. 1, the timing advance offset is 0 for the FDD system and 624^{∗}Ts for the TDD system, Ts=1/30720 ms. When a FDD or TDD terminal access the system, an uplink frame is transmitted at least N_{TA-offset} ahead of a downlink frame having a same frame number with the uplink frame. The fixed timing advance offset N_{TA-offset} for the UE remains unchanged throughout the whole communication process and is a standard setting value.

In the case of the fixed timing advance offset N_{TA-offset} on frames, since a cyclic prefix (CP) of a first symbol in each slot of the LTE subframes has a length different from that of a length of the CP of any other six symbols, there is a problem in which symbols in the frames with the timing advance offset is unaligned with symbols in the frames without the timing advance offset, as shown in FIG. 2. In a case of a timing advance offset N1_{TA-offset}, two symbols in every 7 symbols are unaligned; and in a case of timing advance offset N2_{TA-offset}, four symbols in every 7 symbols are unaligned. To reduce the inference between a first uplink basic unit or a second uplink basic unit with an uplink reference unit, the value of the fixed timing advance offset N_{TA-offset} needs to be reasonably set for the alignment among symbols to the greatest extent. However, no matter how the fixed timing advance offset is set, the problem of unaligned symbols will exist unless the timing advance offset is an integral multiple of the length of 7 symbols, such as the symbols marked in FIG. 2.

US 2012/281566 A1 shows a method and an apparatus for controlling connectivity to a network for intermittent data services.

US 2011/044188 A1 discloses methods, systems, apparatuses and computer program products to improve synchronization of information units communicated in a wireless communication system.

From the publication of Huawei et al.: "Discussion on HD-FDD operation of low cost MTC UEs" (3GPP Draft; R1-141942, 3rd Generation Partnership Project (3GPP), Mobile Competence Center, vol. RAN WG1, no. Seoul, Korea, 20150519 - 20140523, 18 May 2014, XP050787539) it is known that to solve the problem of different switching times for different UEs, a guard period can be created by the UE by not receiving the whole downlink subframe immediately preceding an uplink subframe from the same UE.

Therefore, the problem of unaligned uplink symbols existing in the uplink basic unit and the uplink reference unit when the uplink basic unit and the uplink reference unit have different fixed timing advance offsets in the existing art is solved.

### SUMMARY

Embodiments of the present invention provide methods and devices for transmitting and receiving data for at least solving the problem of unaligned uplink symbols existing in an uplink basic unit and an uplink reference unit when the uplink basic unit and the uplink reference unit have different fixed timing advance offsets in the existing art.

According to an embodiment of the present invention, a method for transmitting data is provided. The method includes: determining one or more orthogonal frequency division multiplexing (OFDM) symbols for transmitting data in an uplink basic unit, where a starting transmission time of the uplink basic unit is preset advance time ahead of a starting transmission time of a downlink basic unit, and the preset advance time is determined according to a dynamic timing advance and a timing advance offset; and transmitting data on the determined one or more OFDM symbols.

According to another embodiment of the present invention, a method for receiving data is provided. The method includes: determining one or more orthogonal frequency division multiplexing (OFDM) symbols for receiving data transmitted by UE in an uplink basic unit, where a starting transmission time of the uplink basic unit is preset advance time ahead of a starting transmission time of a downlink basic unit, and the preset advance time is determined according to a dynamic timing advance and a timing advance offset; and receiving the data transmitted by the UE on the determined one or more OFDM symbols.

According to another embodiment of the present invention, a device for transmitting data is provided. The device includes: a determination module, which is configured to determine one or more orthogonal frequency division multiplexing (OFDM) symbols for transmitting data in an uplink basic unit, where a starting transmission time of the uplink basic unit is preset advance time ahead of a starting transmission time of a downlink basic unit, and the preset advance time is determined according to a dynamic timing advance and a timing advance offset; and a transmission module, which is configured to transmit data on the determined one or more OFDM symbols.

According to another embodiment of the present invention, a device for receiving data is provided. The device includes: a determination module, which is configured to determine one or more orthogonal frequency division multiplexing (OFDM) symbols for receiving data transmitted by UE in an uplink basic unit, where a starting transmission time of the uplink basic unit is preset advance time ahead of a starting transmission time of a downlink basic unit, and the preset advance time is determined according to a dynamic timing advance and a timing advance offset; and a receiving module, which is configured to receive the data transmitted by the UE on the determined one or more OFDM symbols.

Through the present invention, since an advance of the starting transmission time of the uplink basic unit ahead of the starting transmission time of the downlink basic unit is determined according to the dynamic timing advance and the timing advance offset, the problem of unaligned uplink symbols existing in the uplink basic unit and an uplink reference unit when the uplink basic unit and the uplink reference unit have different fixed timing advance offsets in the existing art can be solved, thereby decreasing interference among users and the implementation complexity.

The present invention is defined by the appended claims.

### BRIEF DESCRIPTION OF DRAWINGS

The drawings described herein are used to provide a further understanding of the present invention, and form a part of the present application. The exemplary embodiments and descriptions thereof in the present invention are used to explain the present invention and do not limit the present invention in any improper way. In the drawings:
FIG. 1 is a schematic diagram of a timing relationship between uplink and downlink frames in LTE in the existing art;
FIG. 2 is a schematic diagram of the problem of unaligned symbols caused by a fixed timing advance in the existing art;
FIG. 3 is a block diagram of hardware structure of a mobile terminal for a method for transmitting data according to an embodiment of the present invention;
FIG. 4 is a flowchart of a method for transmitting data according to an embodiment of the present invention;
FIG. 5 is a flowchart of a method for receiving data according to an embodiment of the present invention;
FIG. 6 is a schematic diagram of multiplexing of symbols having different subcarrier spacings according to a preferred embodiment of the present invention;
FIG. 7 is a schematic diagram one illustrating that NB-IoT UE and NR UE coexist in the same carrier according to a preferred embodiment of the present invention;
FIG. 8 is a schematic diagram two illustrating that NB-IoT UE and NR UE coexist in the same carrier according to a preferred embodiment of the present invention;
FIG. 9 is a schematic diagram illustrating that NR eMBB traffic and URLLC traffic coexist in the same carrier according to a preferred embodiment of the present invention;
FIG. 10 is a schematic diagram one of supporting a NR technology by using a LTE MBSFN subframe according to a preferred embodiment of the present invention;
FIG. 11 is a schematic diagram two of supporting a NR technology by using a LTE MBSFN subframe according to a preferred embodiment of the present invention;
FIG. 12 is a block diagram one illustrating a structure of a device for transmitting data according to an embodiment of the present invention;
FIG. 13 is a block diagram two illustrating a structure of a device for transmitting data according to an embodiment of the present invention;
FIG. 14 is a block diagram one illustrating a structure of a device for receiving data according to an embodiment of the present invention;
FIG. 15 is a block diagram two illustrating a structure of a device for receiving data according to an embodiment of the present invention;
FIG. 16 is a block diagram illustrating a structure of UE according to an embodiment of the present invention;
FIG. 17 is a block diagram illustrating a structure of a base station according to an embodiment of the present invention; and
FIG. 18 is a block diagram illustrating a structure of a communication network system according to an embodiment of the present invention.

### DETAILED DESCRIPTION

The present invention will be described hereinafter in detail with reference to the drawings and in conjunction with embodiments. It is to be noted that if not in collision, the embodiments and features therein in the present application may be combined with each other.

It is to be noted that the terms "first", "second" and the like in the description, claims and above drawings of the present invention are used to distinguish between similar objects and are not necessarily used to describe a particular order or sequence.

### Embodiment one

A method embodiment provided by embodiment one of the present application may be executed in a mobile terminal, a base station, a computer terminal or other similar computing apparatuses. In an example, the method is executed in the mobile terminal. FIG. 3 is a block diagram of hardware structure of a method for transmitting data according to an embodiment of the present invention. As shown in FIG. 3, a mobile terminal 30 may include one or more (only one is shown in FIG. 3) processors 32 (the processor 32 may include, but is not limited to, a microprocessor MCU, a programmable logic device such as FPGA, or other processing devices), a memory 34 used for storing data, and a transmission apparatus 36 used for implementing a communication function. It should be understood by those skilled in the art that the structure shown in FIG. 3 is merely illustrative and not intended to limit the structure of the electronic apparatus described above. For example, the mobile terminal 30 may further include more or fewer components than the components shown in FIG. 3 or may have a configuration different from that shown in FIG. 3.

The memory 34 may be configured to store software programs and modules of application software, such as program instructions/modules corresponding to the method for transmitting data in the embodiments of the present invention. The processors 32 execute the software programs and modules stored in the memory 304 to perform functional applications and data processing, that is, to implement the method described above. The memory 34 may include a high-speed random access memory, and may further include a nonvolatile memory, such as one or more magnetic storage apparatuses, flash memories or other nonvolatile solid-state memories. In some examples, the memory 34 may further include memories that are remotely disposed with respect to the processors 32. These remote memories may be connected to the mobile terminal 30 via a network. Examples of the preceding network include, but are not limited to, the Internet, an intranet, a local area network, a mobile communication network and a combination thereof.

The transmission apparatus 36 is configured to receive or transmit data via a network. Optionally examples of such a network may include a wireless network provided by a communication provider of the mobile terminal 30. In one example, the transmission apparatus 36 includes a network interface controller (NIC), which may be connected to other network devices via a base station, thereby communicating with the Internet. In one example, the transmission apparatus 36 may be a radio frequency (RF) module, which is configured to communicate with the Internet wirelessly.

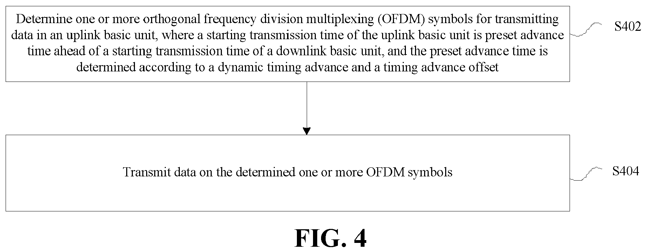

This embodiment provides a method for transmitting data to be executed in the mobile terminal described above. FIG. 4 is a flowchart of a method for transmitting data according to an embodiment of the present invention. As shown in FIG. 4, the method includes the steps described below.

In step S402, one or more orthogonal frequency division multiplexing (OFDM) symbols for transmitting data in an uplink basic unit are determined. A starting transmission time of the uplink basic unit is preset advance time ahead of a starting transmission time of a downlink basic unit, and the preset advance time is determined according to a dynamic timing advance and a timing advance offset.

In step S404, data is transmitted on the determined one or more OFDM symbols.

Through the above steps, an advance of the starting transmission time of the uplink basic unit ahead of the starting transmission time of the downlink basic unit determined according to the dynamic timing advance and the timing advance offset solves the problem of unaligned uplink symbols existing in the uplink basic unit and an uplink reference unit when the uplink basic unit and the uplink reference unit have different fixed timing advance offsets in the existing art, thereby decreasing interference among users and the implementation complexity.

The uplink basic unit is in multiple forms. The uplink basic unit includes n₁ orthogonal frequency division multiplexing (OFDM) symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers. Alternatively, the uplink basic unit includes n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

Optionally, the downlink basic unit and the uplink basic unit may have a same time length.

Optionally, the timing advance offset may be configured by the base station through the radio resource control (RRC) message, and the dynamic timing advance may be dynamically configured by the base station through a timing advance command of a media access control (MAC) control element or a timing advance command in a random access response.

A time length of the S OFDM symbols is a first timing advance time offset of the uplink basic unit relative to the uplink reference unit or a part of the first timing advance time offset of the uplink basic unit relative to the uplink reference unit, the starting transmission time of the uplink reference unit has the second timing advance offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, the first timing advance time offset and the second timing advance time offset are both greater than 0.

Optionally, the uplink reference unit may include n₂ symbols, in determining that the time length of the S OFDM symbols is the part of the first timing advance time offset of the uplink basic unit relative to the uplink reference unit, the first timing advance time offset further includes a time length of first 0.5^{∗}n₂ symbols in the uplink reference unit, symbols in the uplink reference unit are OFDM symbols or SC-FDMA symbols, n₂=2^{∗}w and w is a positive integer.

Optionally, the first timing advance time offset may be obtained according to a third timing advance time offset and the second timing advance time offset, the third timing advance time offset is determined according to the timing advance offset and is a part of the preset advance time, the third timing advance time offset is greater than 0 and is less than or equal to the preset advance time.

Optionally, a subcarrier spacing corresponding to symbols in an uplink reference unit, n₂, a time length of the uplink reference unit and a length of a cyclic prefix of the symbols in the uplink reference unit may use multiple forms. For example, the subcarrier spacing corresponding to the symbols in the uplink reference unit is 15 kHz, n₂ has a value of 14, the uplink reference unit has a time length of 1 ms, an eighth symbol and a first symbol in the uplink reference unit have a same cyclic prefix with a time length of 160^{∗}Ts, each of symbols in the uplink reference unit other than the eighth symbol and the first symbol has a cyclic prefix with a time length of 144^{∗}Ts, where Ts = 1/30720 ms. For another example, a subcarrier spacing corresponding to the symbols in the uplink reference unit is 30 kHz, n₂ has the value of 14, the uplink reference unit has a time length of 0.5 ms, the eighth symbol and the first symbol in the uplink reference unit have the same cyclic prefix with a time length of 160^{∗}Ts1, each of symbols in the uplink reference unit other than the eighth symbol and the first symbol has a cyclic prefix with a time length of 144^{∗}Ts1, where Ts1 = 1/61440 ms. For another example, a subcarrier spacing corresponding to the symbols in the uplink reference unit is 60 kHz, n₂ has the value of 14, the uplink reference unit has a time length of 0.25 ms, the eighth symbol and the first symbol in the uplink reference unit have the same cyclic prefix with a time length of 160^{∗}Ts2, each of symbols in the uplink reference unit other than the eighth symbol and the first symbol has a cyclic prefix with a time length of 144^{∗}Ts2, where Ts2 = 1/122880 ms.

Optionally, the above parameters also may have other values satisfying the following scenarios: a subcarrier spacing corresponding to OFDM symbols in the uplink reference unit is 15^{∗}2^{b} kHz, n₂ has the value of 14, the uplink reference unit has a time length of 1/2^{b} ms, the eighth OFDM symbol and the first OFDM symbol in the uplink reference unit have the same cyclic prefix with a time length of 160^{∗}Tsb, each of symbols in the uplink reference unit other than the eighth OFDM symbol and the first OFDM symbol has a cyclic prefix with a time length of 144^{∗}Tsb, where Tsb=1/(30720^{∗}2^{b}) ms, and b is a nonnegative integer.

Optionally, a subcarrier spacing corresponding to OFDM symbols in the uplink reference unit may be 2^{m∗}15^{∗}2^{b} kHz, n₂ has a value of 14^{∗}2^{m}, a first time length may be 144^{∗}2^{-m∗}Ts, S may have a value of a positive integer multiple of 2^{m}, m has a value equal to one of: 0, 1, 2 and 3, and b has a value of nonnegative integer.

The uplink basic unit and the uplink reference unit have the following relationships: the uplink basic unit has a first timing advance time offset relative to the uplink reference unit, the starting transmission time of the uplink reference unit has a second timing advance time offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, where the first timing advance time offset and the second timing advance time offset are both greater than 0.

Optionally, the uplink reference unit may have multiple structures. For example, the uplink reference unit and a subframe of 1 ms in a LTE system using a normal cyclic prefix has a same time length and symbol structure, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or SC-FDMA symbols in the uplink reference unit) - 16^{∗}Ts, where 0<k<14 and k is a positive integer}, where Ts = 1/30720 ms. For another example, the uplink reference unit has a time length of 0.5 ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a half, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or the SC-FDMA symbols in the uplink reference unit) - 16^{∗}Ts1, where 0<k<14 and k is a positive integer}, where Ts1 = 1/61440 ms. For another example, the uplink reference unit has a time length of 0.25 ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a quarter, the first timing advance time offset has a value equal to an element in a set C or an element in a subset of the set C, the set C is {x|x = (a time length of first k OFDM symbols or SC-FDMA symbols in the uplink reference unit or a time length of the first k OFDM symbols or the SC-FDMA symbols in the uplink reference unit) - 16^{∗}Ts2, where 0<k<14 and k is a positive integer}, where Ts2 = 1/122880 ms.

In this embodiment, a method for receiving data executed on a base station is further provided. A hardware structure of the base station may include one or more processors, a memory for storing data and a transmission apparatus for a communication function. The processors of the base station have a similar function with the processors32, the memory of the base station has a similar function with the memory 34, and the transmission apparatus of the base station has a similar function with the transmission apparatus 36. It will be understood by those skilled in the art that the structure of the above base station is merely illustrative, and not intended to limit the structure of the above base station and the method for receiving data in the present invention. For example, the base station may further include more or fewer components or has a different configuration.

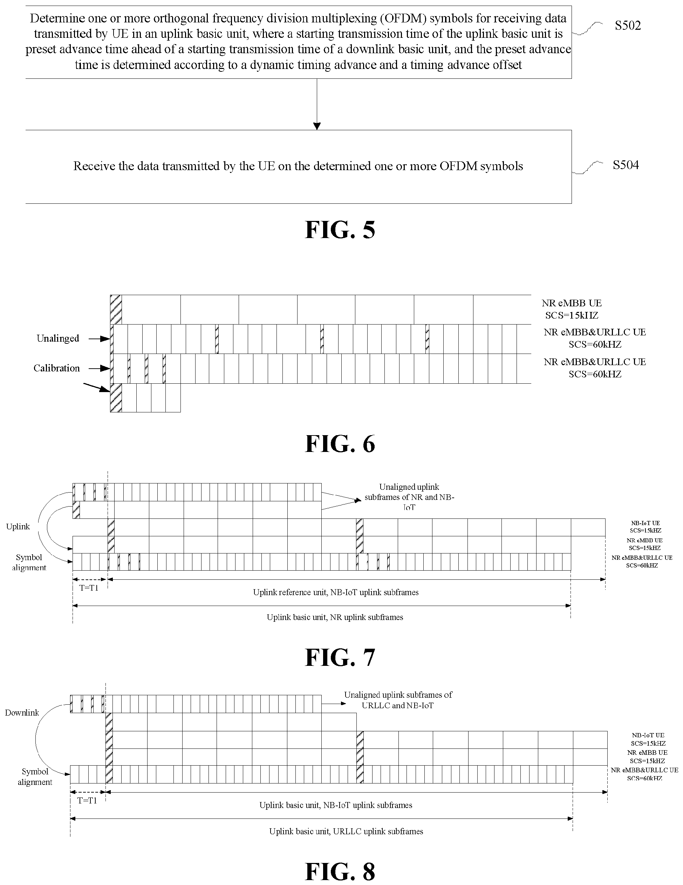

FIG. 5 is a flowchart of a method for receiving data according to an embodiment of the present invention. As shown in FIG. 5, the method includes the steps described below.

In step S502, one or more orthogonal frequency division multiplexing (OFDM) symbols for receiving data transmitted by UE in an uplink basic unit is determined. A starting transmission time of the uplink basic unit is preset advance time ahead of a starting transmission time of a downlink basic unit, and the preset advance time is determined according to a dynamic timing advance and a timing advance offset.

In step S504, the data transmitted by the UE is received on the determined one or more OFDM symbols.

Through the above steps, an advance of the starting transmission time of the uplink basic unit ahead of the starting transmission time of the downlink basic unit determined according to the dynamic timing advance and the timing advance offset solves the problem of unaligned uplink symbols existing in the uplink basic unit and an uplink reference unit when the uplink basic unit and the uplink reference unit have different fixed timing advance offsets in the existing art, thereby decreasing interference among users and the implementation complexity.

The uplink basic unit is in multiple forms.

The uplink basic unit includes n₁ OFDM symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers. Alternatively, the uplink basic unit includes n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

Optionally, the downlink basic unit and the uplink basic unit may have a same time length.

Optionally, the timing advance offset may be configured to the UE through a RRC message, and the dynamic timing advance may be configured to the UE through a timing advance command of a MAC control element or a timing advance command in a random access response.

A time length of the S OFDM symbols is a first timing advance time offset of the uplink basic unit relative to the uplink reference unit or a part of the first timing advance time offset of the uplink basic unit relative to the uplink reference unit, the starting transmission time of the uplink reference unit has the second timing advance offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, the first timing advance time offset and the second timing advance time offset are both greater than 0.

Optionally, the uplink reference unit may include n₂ symbols, when the time length of the S OFDM symbols is the part of the first timing advance time offset of the uplink basic unit relative to the uplink reference unit, the first timing advance time offset further includes a time length of first 0.5^{∗}n₂ symbols in the uplink reference unit, where symbols in the uplink reference unit are OFDM symbols or SC-FDMA symbols, n₂=2^{∗}w and w is a positive integer.

Optionally, the first timing advance time offset may be obtained according to a third timing advance time offset and the second timing advance time offset, the third timing advance time offset is determined according to the timing advance offset and is a part of the preset advance time, the third timing advance time offset is greater than 0 and is less than or equal to the preset advance time.

Optionally, a subcarrier spacing corresponding to symbols in an uplink reference unit, n₂, a time length of the uplink reference unit and a length of a cyclic prefix of the symbols in the uplink reference unit may use multiple forms. For example, the subcarrier spacing corresponding to the symbols in the uplink reference unit is 15 kHz, n₂ has a value of 14, the uplink reference unit has a time length of 1 ms, an eighth symbol and a first symbol in the uplink reference unit have a same cyclic prefix with a time length of 160^{∗}Ts, each of symbols in the uplink reference unit other than the eighth symbol and the first symbol has a cyclic prefix with a time length of 144^{∗}Ts, where Ts = 1/30720 ms. For another example, the subcarrier spacing corresponding to the symbols in the uplink reference unit is 30 kHz, n₂ has the value of 14, the uplink reference unit has a time length of 0.5 ms, the eighth symbol and the first symbol in the uplink reference unit have the same cyclic prefix with the time length of 160^{∗}Ts1, each of symbols in the uplink reference unit other than the eighth symbol and the first symbol has the cyclic prefix with the time length of 144^{∗}Ts1, where Ts1 = 1/61440 ms. For another example, the subcarrier spacing corresponding to the symbols in the uplink reference unit is 60 kHz, n₂ has the value of 14, the uplink reference unit has a time length of 0.25 ms, the eighth symbol and the first symbol in the uplink reference unit have the same cyclic prefix with a time length of 160^{∗}Ts2, each of symbols in the uplink reference unit other than the eighth symbol and the first symbol has a cyclic prefix with a time length of 144^{∗}Ts2, where Ts2 = 1/122880 ms.

Optionally, the above parameters also may have other values satisfying the following scenarios: a subcarrier spacing corresponding to OFDM symbols in the uplink reference unit is 15^{∗}2^{b} kHz, n₂ has the value of 14, the uplink reference unit has a time length of 1/2^{b} ms, the eighth OFDM symbol and the first OFDM symbol in the uplink reference unit have the same cyclic prefix with a time length of 160^{∗}Tsb, each of symbols in the uplink reference unit other than the eighth OFDM symbol and the first OFDM symbol has a cyclic prefix with a time length of 144^{∗}Tsb, where Tsb=1/(30720^{∗}2^{b}) ms, and b is a nonnegative integer.

Optionally, a subcarrier spacing corresponding to OFDM symbols in the uplink reference unit may be 2^{m∗}15^{∗}2b kHz, n₂ has a value of 14^{∗}2^{m}, a first time length may be 144^{∗}2^{-m∗}Ts, S may have a value of a positive integer multiple of 2^{m}, m has a value equal to one of: 0, 1, 2 and 3, and b has a value of nonnegative integer.

The uplink basic unit and the uplink reference unit have the following relationships: the uplink basic unit has a first timing advance time offset relative to the uplink reference unit, the starting transmission time of the uplink reference unit has a second timing advance time offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, where the first timing advance time offset and the second timing advance time offset are both greater than 0.

Optionally, the uplink reference unit may have multiple structures. For example, the uplink reference unit and a subframe of 1 ms in a LTE system using a normal cyclic prefix has a same time length and symbol structure, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or SC-FDMA symbols in the uplink reference unit) - 16^{∗}Ts, where 0<k<14 and k is a positive integer}, where Ts = 1/30720 ms. For another example, the uplink reference unit has a time length of 0.5 ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a half, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or the SC-FDMA symbols in the uplink reference unit) - 16^{∗}Ts1, where 0<k<14 and k is a positive integer}, where Ts1 = 1/61440 ms. For another example, the uplink reference unit has a time length of 0.25 ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a quarter, the first timing advance time offset has a value equal to an element in a set C or an element in a subset of the set C, the set C is {x|x = (a time length of first k OFDM symbols or SC-FDMA symbols in the uplink reference unit or a time length of the first k OFDM symbols or the SC-FDMA symbols in the uplink reference unit) - 16^{∗}Ts2, where 0<k<14 and k is a positive integer}, where Ts2 = 1/122880 ms.

On the basis of the preceding embodiments and preferred embodiments, to explain the entire process interaction of the solution, in this preferred embodiment, a method for transmitting data is provided and described below.

In the existing art, in a FDD or TDD system, when UE access the system, an uplink frame is transmitted at least N_{TA-offset} ahead of a downlink frame with a same frame number. In addition, the base station dynamically adjusts, according to the transmission latency from the UE to the base station, another dynamic timing advance N_{TA}, and the UE obtains, according to the dynamic timing advance and the fixed timing advance offset, final transmission timing, thereby ensuring that signals of different users arrive at the base station at the same time and maintaining uplink orthogonality.

In the process of establishing 3rd generation partnership project (3GPP) new radio (NR) standards, when symbols having different subcarrier spacings are adopted for multiplexing, the problem of unaligned symbols will exist, as shown in FIG. 6. The essential reason is that, in every seven symbols, the CP length of the first symbol is different from the CP length of the remaining six symbols. In the 3GPP RAN1#86th meeting, symbol alignment has been adopted as the working assumption of the NR

To solve the problem of unaligned symbols caused by different subcarrier spacing, a scheme based on scaling down each symbol length is proposed. In FIG. 6, first 4 symbols having a subcarrier spacing of 60 kHz are aligned with a first symbol having a subcarrier spacing of 15 kHz. The CP length and the valid data length of each symbol having the subcarrier spacing of 60 kHz is a quarter of the corresponding part of the symbol having the subcarrier spacing of 15 kHz. In an alternative scheme, the CP length of a second, third and fourth symbols having the subcarrier spacing of 60 kHz also may maintain the same CP length of a 5th symbol having the subcarrier spacing of 60 kHz. For the symbol alignment, the CP length of the first symbol having the subcarrier spacing of 60 kHz will become larger, as shown in the bottom part of FIG. 6. To solve the problem of unaligned uplink symbols existing in the uplink basic unit and the uplink reference unit when the uplink basic unit and the uplink reference unit have different fixed timing advance offsets, a new symbol structure for the uplink basic unit may also need to be provided, thereby achieving the symbol alignment of the uplink basic unit and the uplink reference unit.

As described above, in the LTE, the timing advance offset is a fixed value. In the case of NR FDD, considering that enhance mobile broadband (eMBB) traffic, ultra reliable & low latency communication (URLLC) traffic are accessed to the system on a same reference numerology set, in the RAN1#86th meeting, for eMBB and URLLC uplink transmission, resource sharing may be performed semi-statically by adopting frequency division multiplexing (FDM). Therefore, for UE that needs to enter the URLLC traffic, according to timing requirements, the UE may adjust the timing advance offset of the UE itself in the semi-statically configured resources. Thus dynamic configuration needs to be introduced for the timing advance offset N_{TA-offset}.

The method for transmitting data in the preferred embodiment of the present invention will be described hereinafter in detail with reference to different examples.

### Example one

FIG. 7 is a schematic diagram one illustrating that NB-IoT UE and NR UE coexist in the same carrier according to a preferred embodiment of the present invention. As shown in FIG. 7, it is a case of unaligned uplink symbols when the narrow band Internet of Things (NB-IoT) UE and the NR UE coexist in the same carrier. In this example, a base station supports traffic of NR eMBB UE, NR URLLC UE and the NB-IoT UE at the same time on the same carrier. An uplink subframe i of the NB-IoT UE is an uplink reference unit i, and a downlink subframe i is a downlink reference unit, transmission of the uplink subframe i has a timing advance time offset T2 relative to the starting transmission time of the downlink subframe i, T2=0, the uplink subframe i of the NB-IoT UE has a length of 1ms and includes 14 OFDM symbols, and the subcarrier spacing corresponding to the symbols adopts 15 kHz. For the UE using the NR eMBB or the URLLC, for performing fast feedback, the transmission of the uplink subframe i of the NR UE has a timing advance time offset T1 relative to a starting transmission time of the uplink subframe i of the NB-IoT UE. Before having performed the complete symbol alignment, T1 is an OFDM symbol with the CP length of 160^{∗}Ts, the problem of unaligned symbols always exists between the NR UE and the NB-IoT UE, and Ts=1/30720 ms. After performing the symbol alignment, T1 is an OFDM symbol with the CP length of 144^{∗}Ts, the remaining 13 symbols still adopt symbol structure of first 13 symbols in the uplink subframe i of the NB-IoT, ensuring that in time of a subframe, uplink symbols of the NR UE and the NB-IoT UE are always aligned.

In this example, the uplink basic unit is an uplink subframe i of 1 ms of the NR, when the uplink basic unit is used for the eMBB traffic, the adopted subcarrier spacing is 15 kHz, the number of OFDM symbols included in the subframe length of 1 ms is 14, S has a value of 1, a second and ninth symbols are symbols with a larger CP length of 160^{∗}Ts compared with other symbols. Other symbols have a less CP length of 144^{∗}Ts, and Ts=1/30720 ms. When the uplink basic unit is used for the URLLC traffic, the adopted subcarrier spacing is 60 kHz, the number of OFDM symbols included in the subframe length of 1 ms is 56, S has a value of 4, a 5th to 8th symbols and a 33th to 36th symbols are symbols with a larger CP length of 160^{∗}Ts2 compared with other symbols. Other symbols have a less CP length of 144^{∗}Ts2, and Ts2=1/122880 ms. The downlink basic unit is a downlink subframe of 1 ms of the NR, the starting transmission time of the downlink basic unit is the same as the starting transmission time of the downlink reference unit. For the NR eMBB UE, when transmitting uplink data, a scheduling unit constituted by one or more OFDM symbols of 15 kHz in the subframe of 1ms is adopted for transmitting the data. For the NR URLLC UE, when transmitting the uplink data, a scheduling unit constituted by one or more OFDM symbols of 60 kHz in the subframe of 1ms may be adopted for transmitting the data.

### Example two

FIG. 8 is a schematic diagram two illustrating that NB-IoT UE and NR UE coexist in the same carrier according to a preferred embodiment of the present invention. As shown in FIG. 8, it is a case of unaligned uplink symbols when the NB-IoT UE and the NR UE coexist in the same carrier. In this example, a base station supports traffic of NR eMBB UE, NR URLLC UE and the NB-IoT UE at the same time on the same carrier. An uplink subframe i of the NB-IoT UE is an uplink reference unit i, and a downlink subframe i is a downlink reference unit, transmission of the uplink subframe i has a timing advance time offset T2 relative to a starting transmission time of the downlink subframe i, T2=0, the uplink subframe i of the NB-IoT UE has a length of 1ms and includes 14 OFDM symbols, and the subcarrier spacing corresponding to the symbols adopts 15k Hz. For the UE using the NR URLLC, for performing fast feedback, the transmission of the uplink subframe i of the NR UE has a timing advance time offset T1 relative to the starting transmission time of the uplink subframe i of the NB-IoT UE. Before having performed complete symbol alignment, T1 is an OFDM symbol with the CP length of 160^{∗}Ts, the problem of unaligned symbols always exists between the NR URLLC UE and the NB-IoT UE. After performing the symbol alignment, T1 is an OFDM symbol with the CP length of 144^{∗}Ts, the remaining 13 symbols still adopt symbol structure of first 13 symbols in the uplink subframe i of the NB-IoT, ensuring that in time of a subframe, uplink symbols of the NR URLLC UE and the NB-IoT UE are always aligned.

In this example, the uplink basic unit is an uplink subframe i of 1 ms of the NR URLLC, the adopted subcarrier spacing is 60 kHz, the number of OFDM symbols included in the subframe length of 1 ms is 56, S has a value of 4, an additional CP exists between a fourth symbol and a fifth symbol, and an additional CP also exists between a 32th symbol and 33th symbol. Each OFDM symbol has the CP length of 144^{∗}Ts2, and Ts2=1/122880 ms. The downlink basic unit is a downlink subframe of 1 ms of the NR URLLC, the starting transmission time of the downlink basic unit is the same as the starting transmission time of the downlink reference unit.

In this example, the starting transmission time of the uplink subframe i of the NR eMBB UE is the same as the starting transmission time of the uplink subframe i of the NB-IoT UE, that is, a timing advance offset N_{TA-offset} is 0. For the NR URLLC UE, when accessing to the system, similar to the NR eMBB UE, the starting transmission time of the uplink frame i is the same as the starting transmission time of the uplink subframe i of the NB-IoT UE. After accessing to the system, the transmission of the uplink subframe i of the NR URLLC relative to the starting transmission time of the downlink subframe i is reconfigured to a LTE OFDM symbol length of a subcarrier spacing equal to 15 kHz with the CP length of 144^{∗}Ts. For the NR URLLC UE, when transmitting the uplink data, a scheduling unit constituted by one or more OFDM symbols of 60 kHz in the subframe of 1 ms may be adopted for transmitting the data.

### Example three

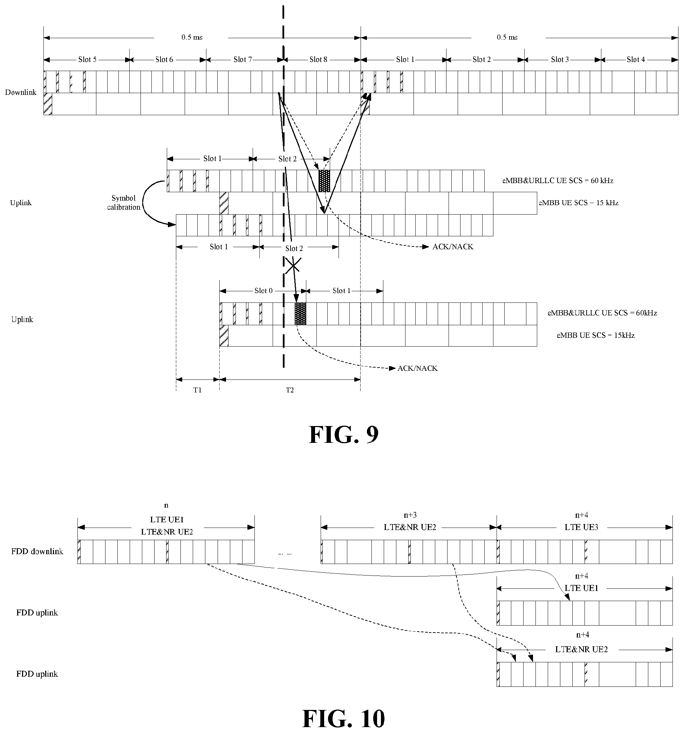

FIG. 9 is a schematic diagram illustrating that NR eMBB traffic and URLLC traffic coexist in the same carrier according to a preferred embodiment of the present invention. As shown in FIG. 9, it is a schematic diagram of unaligned uplink symbols when NR eMMB UE and URLLC UE coexist in the same carrier For the URLLC UE, it has the ability of the eMMB UE, that is, the URLLC UE may to the system through eMBB related technologies, and then switch to the URLLC traffic. In this example, a base station supports traffic of the NR eMBB UE, and the NR URLLC UE at the same time on the same carrier. An uplink subframe i relative to a downlink subframe i of the URLLC UE and the eMBB UE in the bottom part in FIG. 9 has a same timing advance time offset. In this case, the URLLC UE cannot achieve fast feedback. Therefore, after the UE having URLLC traffic ability accesses to the system, the timing advance time offset is reconfigured through a RRC message, as shown in the middle part in FIG. 6.In this case, the uplink subframe i of the NR eMBB traffic UE is an uplink reference unit, the downlink subframe i is a downlink reference unit. In this case, the uplink subframe i of the URLLC traffic UE is an uplink basic unit, the downlink subframe i is a downlink basic unit. A starting transmission time of the downlink reference unit is the same as a starting transmission time of the downlink basic unit. Transmission of the uplink reference unit has a timing advance time offset T2 relative to the starting transmission time of the downlink reference unit. T2 is a time length of first three OFDM symbols of a LTE subframe of 1ms of subcarrier spacing equal to 15 kHz. For the UE using the NR URLLC, for performing fast feedback, transmission of the uplink subframe i of the NR URLLC UE has a timing advance time offset T1 relative to a starting transmission time of the uplink subframe i of the NR eMBB traffic UE. Before having performed the complete symbol alignment, T1 is an OFDM symbol with the CP length of 160^{∗}Ts, the problem of unaligned symbols always exists between the NR URLLC UE and the eMBB UE. After performing the symbol alignment, T1 is an OFDM symbol with the CP length of 144^{∗}Ts, the remaining 13 symbols still adopt symbol structure of first 13 symbols in the uplink subframe i of the eMBB UE, ensuring that in time of a subframe, uplink symbols of the NR URLLC UE and the eMBB UE are always aligned.

In this example, the uplink basic unit is the uplink subframe i of 1ms of the NR URLLC, the adopted subcarrier spacing is 60kHz, the number of OFDM symbols included in the subframe of 1 ms is 56, S has a value of 4, a 5th to 8th symbols and a 33th to 36th symbols are are symbols with a larger CP length of 160^{∗}Ts2 compared with other symbols. Other symbols have a less CP length of 144^{∗}Ts2, and Ts2=1/122880ms. The uplink reference unit is the uplink subframe i of 1ms of the NR eMBB, the adopted subcarrier spacing is 15kHz, the number of OFDM symbols included in the subframe of 1 ms is 14, and symbol structure of all symbols are the same as the symbol structure of the OFDM symbols in the LTE subframe of 1 ms of the subcarrier spacing of 15kHz. For the NR URLLC UE, when transmitting the uplink data, a scheduling unit constituted by one or more OFDM symbols of 60kHz in the subframe of 1ms may be adopted for transmitting the data.

### Example four

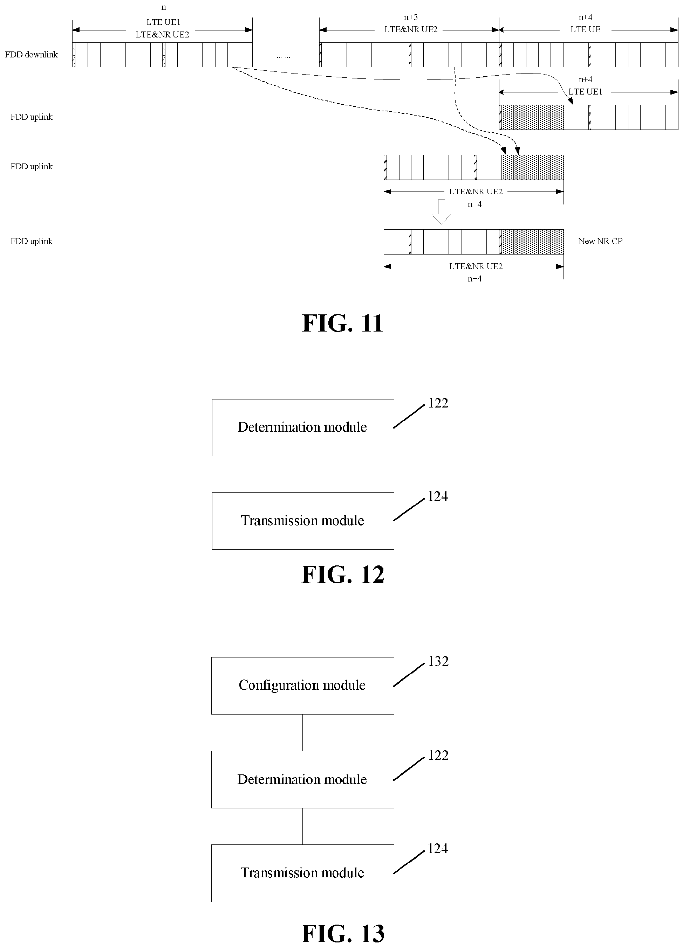

FIG. 10 is a structural diagram one of supporting a NR technology by using a LTE multicast broadcast single frequency network (MBSFN) subframe according to a preferred embodiment of the present invention. In this example, a base station supports traffic of LTE UE and NR UE at the same time on the same carrier and supports the NR technology by using the MBSFN subframe of the LTE. An uplink subframe i of UE simultaneously supporting the LTE and the NR technologies and the LTE UE relative to a downlink subframe i has a same timing advance time offset. In this case, the fast feedback cannot be achieved well. In a base station simultaneously supporting the LTE and the NR technologies, with increasing of UE simultaneously supporting the LTE and the NR technologies, it is necessary to consider performing timing advance on such UE for better fast feedback, thereby increasing the system capacity. Therefore, after the UE simultaneously supporting the LTE and the NR technologies accesses to the system, the timing advance time offset of such UE is reconfigured through a RRC message, as shown in FIG. 11. In this case, the uplink subframe i of the UE simultaneously supporting the LTE and the NR technologies is an uplink reference unit, the downlink subframe i is a downlink reference unit. The uplink subframe i of UE only supporting the LTE technology is an uplink basic unit, the downlink subframe i is a downlink basic unit. A starting transmission time of the downlink reference unit is the same as a starting transmission time of the downlink basic unit. Transmission of the uplink reference unit has a timing advance time offset T2 relative to the starting transmission time of the downlink reference unit and T2=0. For the UE simultaneously supporting the LTE and the NR technologies, for performing fast feedback, transmission of the uplink subframe i of such UE has a timing advance time offset T1 relative to a starting transmission time of the uplink subframe i of the UE only supporting the LTE technology, Before having performed the complete symbol alignment, T1 is a time length minus 16^{∗}Ts of first nine OFDM symbols of a LTE subframe of 1 ms of a subcarrier spacing equal to 15 kHz, and Ts=1/30720 ms. In this case, the problem of unaligned symbols always exists between the UE simultaneously supporting the LTE and the NR technologies and the UE only supporting the LTE technology. After performing the symbol alignment, T1 is a time length of two OFDM symbols with a CP length of 144^{∗}Ts plus a time length of first seven OFDM symbols with a LTE subframe of 1ms of the subcarrier spacing equal to 15 kHz. The UE only supporting the LTE technology, ensuring that in time of a subframe, uplink symbols of the UE simultaneously supporting the LTE and the NR technologies and the UE only supporting the LTE technology are always aligned.

In this example, the uplink basic unit is the uplink subframe i of the UE simultaneously supporting the LTE and the NR technologies. The adopted subcarrier spacing is 15 kHz, the number of OFDM symbols included in the subframe length of 1 ms is 14, S has a value of 2, a third and tenth symbols are symbols with a larger CP length of 160^{∗}Ts compared with other symbols. Other symbols have a less CP length of 144^{∗}Ts, and Ts=1/30720 ms. The uplink reference unit is the uplink subframe i of the UE only supporting the LTE technology, the adopted subcarrier spacing is 15 kHz, and the number of OFDM symbols included in the subframe length of 1 ms is 14. For the UE simultaneously supporting the LTE and the NR technologies, when transmitting uplink data, a scheduling unit constituted by one or more OFDM symbols of 15 kHz in the subframe of 1ms is adopted for transmitting the data.

An object of the preferred embodiment of the present invention is to solve the problem of unaligned uplink symbols existing in the uplink basic unit and an uplink reference unit when the uplink basic unit and the uplink reference unit have different fixed timing advance offsets N_{TA-offset} in the existing art, and to provide a method for aligning symbols in a unit time length. Such method can decrease interference brought by unaligned uplink symbols and decreases the implementation complexity brought by unaligned uplink symbols. In addition, the preferred embodiment points that dynamic configuration is required for the timing advance offset N_{TA-offset} in some scenarios, and provides suggested configuration values according to a principle of decreasing the uplink interference as much as possible. Compared with the existing art, the technical solutions provided by the preferred embodiment are capable of solving the problem of unaligned uplink symbols existing in the uplink basic unit and an uplink reference unit when the uplink basic unit and the uplink reference unit have different fixed timing advance offsets N_{TA-offset} in the existing art, thereby decreasing interference among users while decreasing the implementation complexity.

From the description of the embodiment described above, it will be apparent to those skilled in the art that the methods in the embodiment described above may be implemented by software plus a necessary general-purpose hardware platform, or may of course be implemented by hardware. However, in many cases, the former is a preferred implementation mode. Based on this understanding, the solution provided by the present invention substantially, or the part contributing to the related art, may be embodied in the form of a software product. The computer software product is stored in a storage medium (such as an ROM/RAM, a magnetic disk or an optical disk) and includes several instructions for enabling a terminal device (which may be a mobile phone, a computer, a server, a network device, or the like) to execute the method according to each embodiment of the present invention.

### Embodiment two

A device for transmitting data is provided in this embodiment. The device is used for implementing the above-mentioned embodiments and preferred embodiments. What has been described will not be repeated. As used below, the term "module" may be software, hardware or a combination thereof capable of implementing predetermined functions. The device in the embodiment described below is preferably implemented by software, but implementation by hardware or by a combination of software and hardware is also possible and conceived.

FIG. 12 is a block diagram illustrating a structure of a device for transmitting data according to an embodiment of the present invention. As shown in FIG. 12, the device includes a determination module 122 and a transmission module 124.

The determination module 122 is configured to determine one or more OFDM symbols for transmitting data in an uplink basic unit. A starting transmission time of the uplink basic unit is preset advance time ahead of a starting transmission time of a downlink basic unit, and the preset advance time is determined according to a dynamic timing advance and a timing advance offset.

The transmission module 124 is connected to the determination module 122 described above and is configured to transmit data on the determined one or more OFDM symbols.

The uplink basic unit includes n₁ OFDM symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers.

Alternatively, the uplink basic unit includes n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

FIG. 13 is a block diagram two illustrating a structure of a device for transmitting data according to an embodiment of the present invention. As shown in FIG. 13, the device further includes a configuration module 132 in addition to all of the modules shown in FIG. 12.

The configuration module 132 is configured to configure the timing advance offset according to a RRC message transmitted by a base station, and/or configure the dynamic timing advance according to configuration information of the base station, where the configuration information is carried in a timing advance command of a MAC control element or a timing advance command in a random access response.

A time length of the S OFDM symbols is a first timing advance time offset of the uplink basic unit relative to the uplink reference unit or a part of the first timing advance time offset of the uplink basic unit relative to the uplink reference unit, the starting transmission time of the uplink reference unit has the second timing advance offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, the first timing advance time offset and the second timing advance time offset are both greater than 0.

Optionally, the determination module 122 may be further configured to determine the first timing advance time offset according to a third timing advance time offset and the second timing advance time offset. The third timing advance time offset is determined according to the timing advance offset and is a part of the preset advance time, the third timing advance time offset is greater than 0 and is less than or equal to the preset advance time.

A device for receiving data is provided in this embodiment. The device is used for implementing the above-mentioned embodiments and preferred embodiments. What has been described will not be repeated.

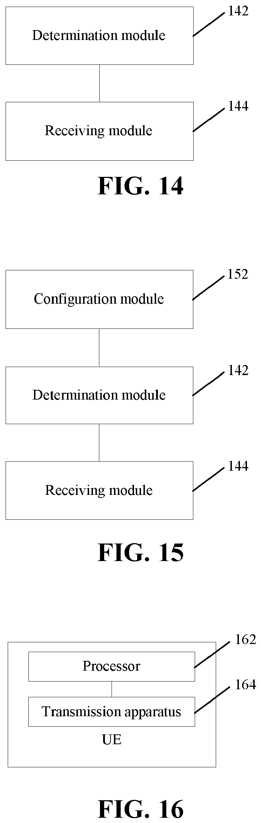

FIG. 14 is a block diagram illustrating a structure of a device for receiving data according to an embodiment of the present invention. As shown in FIG. 14, the device includes a determination module 142 and a receiving module 144.

The determination module 142 is configured to determine one or more OFDM symbols for receiving data transmitted by the terminal in an uplink basic unit. A starting transmission time of the uplink basic unit is preset advance time ahead of a starting transmission time of a downlink basic unit, and the preset advance time is determined according to a dynamic timing advance and a timing advance offset.

The receiving module 144 is connected to the determination module 142 described above and is configured to receive data transmitted by a terminal on the determined one or more OFDM symbols.

The uplink basic unit includes n₁ OFDM symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers.

Alternatively, the uplink basic unit may include n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

FIG. 15 is a block diagram two illustrating a structure of a device for receiving data according to an embodiment of the present invention. As shown in FIG. 15, the device further includes a configuration module 152 in addition to all of the modules shown in FIG. 14.

The configuration module 152 is configured to configure the timing advance offset through a RRC message to the terminal, and/or configure the dynamic timing advance to the terminal through a timing advance command of a MAC control element or a timing advance command in a random access response.

A time length of the S OFDM symbols is a first timing advance time offset of the uplink basic unit relative to the uplink reference unit or a part of the first timing advance time offset of the uplink basic unit relative to the uplink reference unit, the starting transmission time of the uplink reference unit has the second timing advance offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, the first timing advance time offset and the second timing advance time offset are both greater than 0.

Optionally, the determination module 142 may be further configured to determine the first timing advance time offset according to a third timing advance time offset and the second timing advance time offset, the third timing advance time offset is determined according to the timing advance offset and is a part of the preset advance time, the third timing advance time offset is greater than 0 and is less than or equal to the preset advance time.

It is to be noted that the various modules described above may be implemented by software or hardware. Implementation by hardware may, but may not necessarily, be performed in the following manners: the various modules described above are located in a same processor, or the various modules described above are located in their respective processors in any combination form.

### Embodiment three

This embodiment provides a terminal, a base station and a communication network system, which are used for implementing the above-mentioned embodiments and preferred embodiments. What has been described will not be repeated.

FIG. 16 is a block diagram illustrating a structure of a terminal according to an embodiment of the present invention. As shown in FIG. 16, the terminal includes a processor 162 and a transmission apparatus 164. The terminal is described below.

The processor 162 is configured to determine one or more OFDM symbols for transmitting data in an uplink basic unit. A starting transmission time of the uplink basic unit is preset advance time ahead of a starting transmission time of a downlink basic unit, and the preset advance time is determined according to a dynamic timing advance and a timing advance offset.

A transmission apparatus 164 is connected to the processor 162 described above and is configured to transmit data on the determined one or more OFDM symbols.

The uplink basic unit includes n₁ OFDM symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers.

Alternatively, the uplink basic unit includes n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

Optionally, the processor 162 may be further configured to configure the timing advance offset according to a radio resource control (RRC) message transmitted by a base station, and/or configure the dynamic timing advance according to configuration information of the base station, where the configuration information is carried in a timing advance command of a media access control (MAC) control element or a timing advance command in a random access response.

A time length of the S OFDM symbols is a first timing advance time offset of the uplink basic unit relative to the uplink reference unit or a part of the first timing advance time offset of the uplink basic unit relative to the uplink reference unit, the starting transmission time of the uplink reference unit has the second timing advance offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, the first timing advance time offset and the second timing advance time offset are both greater than 0.

Optionally, the processor 162 may be further configured to determine the first timing advance time offset according to a third timing advance time offset and the second timing advance time offset, the third timing advance time offset is determined according to the timing advance offset and is a part of the preset advance time, the third timing advance time offset is greater than 0 and is less than or equal to the preset advance time.

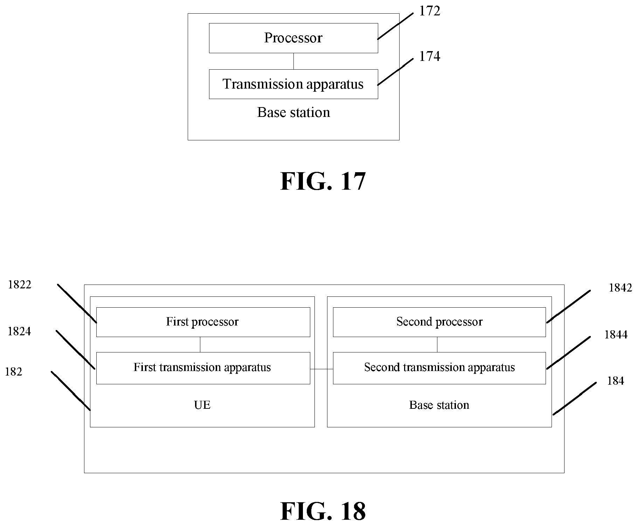

FIG. 17 is a block diagram illustrating a structure of a base station according to an embodiment of the present invention. As shown in FIG. 17, the base station includes a processor 172 and a transmission apparatus 174. The base station is described below.

The processor 172 is configured to determine one or more OFDM symbols for receiving data transmitted by the terminal in an uplink basic unit. A starting transmission time of the uplink basic unit is preset advance time ahead of a starting transmission time of a downlink basic unit, and the preset advance time is determined according to a dynamic timing advance and a timing advance offset.

A transmission apparatus 174 is connected to the processor 172 described above and is configured to receive the data transmitted by the terminal on the determined one or more OFDM symbols.

The uplink basic unit includes n₁ OFDM symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers.

Alternatively, the uplink basic unit may include n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

Optionally, the processor 172 may be further configured to configure the timing advance offset through a RRC message to the terminal, and/or configure the dynamic timing advance to the terminal through a timing advance command of a MAC control element or a timing advance command in a random access response.

A time length of the S OFDM symbols is a first timing advance time offset of the uplink basic unit relative to the uplink reference unit or a part of the first timing advance time offset of the uplink basic unit relative to the uplink reference unit, the starting transmission time of the uplink reference unit has the second timing advance offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, the first timing advance time offset and the second timing advance time offset are both greater than 0.

Optionally, the processor 172 may be further configured to determine the first timing advance time offset according to a third timing advance time offset and the second timing advance time offset, the third timing advance time offset is determined according to the timing advance offset and is a part of the preset advance time, the third timing advance time offset is greater than 0 and is less than or equal to the preset advance time.

FIG. 18 is a block diagram illustrating a structure of a communication network system according to an embodiment of the present invention. As shown in FIG. 18, the communication network system includes a terminal 182 and a base station 184. The terminal 182 includes a first processor 1822 and a first transmission apparatus 1824. The base station 184 includes a second processor 1842 and a second transmission apparatus 1844. The communication network system is described below.

The first processor 1822 is configured to determine one or more OFDM symbols for transmitting data in an uplink basic unit. A starting transmission time of the uplink basic unit is preset advance time ahead of a starting transmission time of a downlink basic unit, and the preset advance time is determined according to a dynamic timing advance and a timing advance offset.

The first transmission apparatus 1824 is connected to the first processor 1822 described above and is configured to transmit data on the determined one or more OFDM symbols to the base station.

The second processor 1842 is configured to determine one or more OFDM symbols for receiving data transmitted by the terminal in an uplink basic unit.

The second transmission apparatus 1844 is connected to the second processor 1842 described above and is configured to receive the data transmitted by the terminal on the determined one or more OFDM symbols.

The uplink basic unit includes n₁ OFDM symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers.

Alternatively, the uplink basic unit may include n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

Optionally, the second processor 1842 may be further configured to configure the timing advance offset through a RRC message to the terminal, and/or configure the dynamic timing advance to the terminal through a timing advance command of a MAC control element or a timing advance command in a random access response. The first processor 1822 may be further configured to configure the timing advance offset according to the RRC message transmitted by the base station, and/or configure the dynamic timing advance according to configuration information of the base station, where the configuration information is carried in a timing advance command of the MAC control element or a timing advance command in a random access response.

### Embodiment four

The embodiment of the present invention further provides a storage medium. Optionally, in this embodiment, the storage medium may be configured to store program codes for executing steps described below.

In step S1, one or more OFDM symbols for transmitting data in an uplink basic unit are determined. A starting transmission time of the uplink basic unit is preset advance time ahead of a starting transmission time of a downlink basic unit, and the preset advance time is determined according to a dynamic timing advance and a timing advance offset.

In step S2, data is transmitted on the determined one or more OFDM symbols. The uplink basic unit includes n₁ OFDM symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers.

Alternatively, the uplink basic unit may include n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

Optionally, the downlink basic unit and the uplink basic unit have a same time length.

Optionally, the timing advance offset is configured by the base station through the RRC message.

Optionally, the dynamic timing advance is dynamically configured by the base station through a timing advance command of MAC control element or a timing advance command in a random access response.

A time length of the S OFDM symbols is a first timing advance time offset of the uplink basic unit relative to the uplink reference unit or a part of the first timing advance time offset of the uplink basic unit relative to the uplink reference unit, the starting transmission time of the uplink reference unit has the second timing advance offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, the first timing advance time offset and the second timing advance time offset are both greater than 0.

Optionally, the uplink reference unit may include n₂ symbols; when the time length of the S OFDM symbols is the part of the first timing advance time offset of the uplink basic unit relative to the uplink reference unit, the first timing advance time offset further includes a time length of first 0.5^{∗}n₂ symbols in the uplink reference unit, where symbols in the uplink reference unit are OFDM symbols or SC-FDMA symbols, n₂=2^{∗}w and w is a positive integer.

Optionally, the first timing advance time offset may be obtained according to a third timing advance time offset and the second timing advance time offset, the third timing advance time offset is determined according to the timing advance offset and is a part of the preset advance time, the third timing advance time offset is greater than 0 and is less than or equal to the preset advance time.

Optionally, the subcarrier spacing corresponding to the symbols in the uplink reference unit is 15 kHz, n₂ has the value of 14, the uplink reference unit has a time length of 1 ms, an eighth symbol and a first symbol in the uplink reference unit have the same cyclic prefix with the time length of 160^{∗}Ts, each of symbols in the uplink reference unit other than the eighth symbol and the first symbol has the cyclic prefix with the time length of 144^{∗}Ts, where Ts = 1/30720 ms.

Optionally, a subcarrier spacing corresponding to the OFDM symbols in the uplink basic unit is 2^{m∗}15 kHz, a value of n₁ is 14^{∗}2m, the first time length is 144^{∗}2^{-m∗}Ts, a value of S is a positive integer multiple of 2^{m}, and a value of M is at least one of: 0, 1, 2, and 3.

Optionally, the subcarrier spacing corresponding to the symbols in the uplink reference unit is 30 kHz, n₂ has the value of 14, the uplink reference unit has a time length of 0.5ms, an eighth symbol and a first symbol in the uplink reference unit have the same cyclic prefix with the time length of 160^{∗}Ts1, each of symbols in the uplink reference unit other than the eighth symbol and the first symbol has the cyclic prefix with the time length of 144^{∗}Ts1, where Ts1=1/61440 ms.

Optionally, a subcarrier spacing corresponding to the OFDM symbols in the uplink basic unit is 2^{m∗}30 kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

Optionally, the subcarrier spacing corresponding to the symbols in the uplink reference unit is 60 kHz, n₂ has the value of 14, the uplink reference unit has a time length of 0.25ms, an eighth symbol and a first symbol in the uplink reference unit have the same cyclic prefix with the time length of 160^{∗}Ts2, each of symbols in the uplink reference unit other than the eighth symbol and the first symbol has the cyclic prefix with the time length of 144^{∗}Ts2, where Ts2=1/122880 ms.

Optionally, a subcarrier spacing corresponding to the symbols in the uplink basic unit is 2^{m∗}60kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

The uplink basic unit has a first timing advance time offset relative to the uplink reference unit, a starting transmission time of the uplink reference unit has a second timing advance time offset relative to a starting transmission time of a downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, where the first timing advance time offset and the second timing advance time offset are both greater than 0.

Optionally, the uplink reference unit and a subframe of 1 ms in a LTE system using a normal cyclic prefix has a same time length and symbol structure, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or SC-FDMA symbols in the uplink reference unit) - 16^{∗}Ts, where 0<k<14 and k is a positive integer}, where Ts = 1/30720 ms.

Optionally, the uplink reference unit has a time length of 0.5 ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a half, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or the SC-FDMA symbols in the uplink reference unit) - 16^{∗}Ts1, where 0<k<14 and k is a positive integer}, where Ts1 = 1/61440 ms.

Optionally, the uplink reference unit has a time length of 0.25 ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a quarter, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or the SC-FDMA symbols in the uplink reference unit) - 16^{∗}Ts2, where 0<k<14 and k is a positive integer}, where Ts2=1/122880 ms.

The embodiment of the present invention further provides a storage medium. Optionally, in this embodiment, the storage medium may be configured to store program codes for executing steps described below.

In step S1, one or more OFDM symbols for receiving data transmitted are determined by a terminal in an uplink basic unit, where a starting transmission time of the uplink basic unit is preset advance time ahead of a starting transmission time of a downlink basic unit, and the preset advance time is determined according to a dynamic timing advance and a timing advance offset.

In step S2, the data transmitted by the terminal is received on the determined one or more OFDM symbols.

The uplink basic unit includes n₁ OFDM symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers.

Alternatively, the uplink basic unit may include n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

Optionally, the downlink basic unit and the uplink basic unit have a same time length.

Optionally, the timing advance offset is configured by the base station through the RRC message to the terminal.

Optionally, the dynamic timing advance is dynamically configured by the base station through a timing advance command of a MAC control element or a timing advance command in a random access response to the terminal.

A time length of the S OFDM symbols is a first timing advance time offset of the uplink basic unit relative to the uplink reference unit or a part of the first timing advance time offset of the uplink basic unit relative to the uplink reference unit, the starting transmission time of the uplink reference unit has the second timing advance offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, the first timing advance time offset and the second timing advance time offset are both greater than 0.

Optionally, the uplink reference unit may include n₂ OFDM symbols, when the time length of the S OFDM symbols is the part of the first timing advance time offset of the uplink basic unit relative to the uplink reference unit, the first timing advance time offset further includes a time length of first 0.5^{∗}n₂ symbols in the uplink reference unit, where symbols in the uplink reference unit are OFDM symbols or SC-FDMA symbols, n₂=2^{∗}w and w is a positive integer.

Optionally, the first timing advance time offset may be obtained according to a third timing advance time offset and the second timing advance time offset, the third timing advance time offset is determined according to the timing advance offset and is a part of the preset advance time, the third timing advance time offset is greater than 0 and is less than or equal to the preset advance time.

Optionally, the subcarrier spacing corresponding to the symbols in the uplink reference unit is 15 kHz, n₂ has the value of 14, the uplink reference unit has a time length of 1 ms, an eighth symbol and a first symbol in the uplink reference unit have the same cyclic prefix with the time length of 160^{∗}Ts, each of symbols in the uplink reference unit other than the eighth symbol and the first symbol has the cyclic prefix with the time length of 144^{∗}Ts, where Ts = 1/30720 ms.

Optionally, a subcarrier spacing corresponding to the OFDM symbols in the uplink basic unit is 2m^{∗}15 kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

Optionally, the subcarrier spacing corresponding to the symbols in the uplink reference unit is 30 kHz, n₂ has the value of 14, the uplink reference unit has a time length of 0.5ms, an eighth symbol and a first symbol in the uplink reference unit have the same cyclic prefix with the time length of 160^{∗}Ts1, each of symbols in the uplink reference unit other than the eighth symbol and the first symbol has the cyclic prefix with the time length of 144^{∗}Ts1, where Ts1=1/61440 ms.

Optionally, a subcarrier spacing corresponding to the OFDM symbols in the uplink basic unit is 2^{m∗}30kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

Optionally, the subcarrier spacing corresponding to the symbols in the uplink reference unit is 60 kHz, n₂ has the value of 14, the uplink reference unit has a time length of 0.25 ms, an eighth symbol and a first symbol in the uplink reference unit have the same cyclic prefix with the time length of 160^{∗}Ts2, each of symbols in the uplink reference unit other than the eighth symbol and the first symbol has the cyclic prefix with the time length of 144^{∗}Ts2, where Ts2=1/122880 ms.

Optionally, a subcarrier spacing corresponding to the symbols in the uplink basic unit is 2^{m∗}60 kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

The uplink basic unit has a first timing advance time offset relative to the uplink reference unit, a starting transmission time of the uplink reference unit has a second timing advance time offset relative to a starting transmission time of a downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, where the first timing advance time offset and the second timing advance time offset are both greater than 0.

Optionally, the uplink reference unit and a subframe of 1 ms in a LTE system using a normal cyclic prefix has a same time length and symbol structure, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or SC-FDMA symbols in the uplink reference unit) - 16^{∗}Ts, where 0<k<14 and k is a positive integer}, where Ts = 1/30720 ms.

Optionally, the uplink reference unit has a time length of 0.5 ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a half, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or the SC-FDMA symbols in the uplink reference unit) - 16^{∗}Ts1, where 0<k<14 and k is a positive integer}, where Ts1 = 1/61440 ms.

Optionally, the uplink reference unit has a time length of 0.25 ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a quarter, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or the SC-FDMA symbols in the uplink reference unit) - 16^{∗}Ts2, where 0<k<14 and k is a positive integer}, where Ts2=1/122880 ms.

Optionally, in this embodiment, the storage medium described above may include, but is not limited to, a USB flash disk, a read-only memory (ROM), a random access memory (RAM), a mobile hard disk, a magnetic disk, an optical disk or another medium capable of storing program codes.

In this embodiment, the processor executes, according to the program codes stored in the storage medium the following steps: determining one or more OFDM symbols for transmitting data in an uplink basic unit, where a starting transmission time of the uplink basic unit is preset advance time ahead of a starting transmission time of a downlink basic unit, and the preset advance time is determined according to a dynamic timing advance and a timing advance offset; and transmitting data on the determined one or more OFDM symbols.

Alternatively, in this embodiment, the uplink basic unit includes n₁ OFDM symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers.

Optionally, in this embodiment, the uplink basic unit may include n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

Optionally, in this embodiment, the downlink basic unit and the uplink basic unit have a same time length.

Optionally, in this embodiment, the timing advance offset is configured by the base station through the RRC message.

Optionally, in this embodiment, the dynamic timing advance is dynamically configured by the base station through a timing advance command of a MAC control element or a timing advance command in a random access response.

In this embodiment, a time length of the S OFDM symbols may be a first timing advance time offset of the uplink basic unit relative to the uplink reference unit or a part of the first timing advance time offset of the uplink basic unit relative to the uplink reference unit, the starting transmission time of the uplink reference unit has the second timing advance offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, the first timing advance time offset and the second timing advance time offset are both greater than 0.

Optionally, in this embodiment, the uplink reference unit may include n₂ symbols, when the time length of the S OFDM symbols is the part of the first timing advance time offset of the uplink basic unit relative to the uplink reference unit, the first timing advance time offset further includes a time length of first 0.5^{∗}n₂ symbols in the uplink reference unit, where symbols in the uplink reference unit are OFDM symbols or SC-FDMA symbols, n₂=2^{∗}w and w is a positive integer.

Optionally, in this embodiment, the first timing advance time offset may be obtained according to a third timing advance time offset and the second timing advance time offset, the third timing advance time offset is determined according to the timing advance offset and is a part of the preset advance time, the third timing advance time offset is greater than 0 and is less than or equal to the preset advance time.

Optionally, in this embodiment, the subcarrier spacing corresponding to the symbols in the uplink reference unit is 15 kHz, n₂ has the value of 14, the uplink reference unit has a time length of 1 ms, an eighth symbol and a first symbol in the uplink reference unit have the same cyclic prefix with the time length of 160^{∗}Ts, each of symbols in the uplink reference unit other than the eighth symbol and the first symbol has the cyclic prefix with the time length of 144^{∗}Ts, where Ts = 1/30720 ms.

Optionally, in this embodiment, a subcarrier spacing corresponding to the OFDM symbols in the uplink basic unit is 2^{m∗}15 kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

Optionally, in this embodiment, the subcarrier spacing corresponding to the symbols in the uplink reference unit is 30 kHz, n₂ has the value of 14, the uplink reference unit has a time length of 0.5 ms, an eighth symbol and a first symbol in the uplink reference unit have the same cyclic prefix with the time length of 160^{∗}Ts1, each of symbols in the uplink reference unit other than the eighth symbol and the first symbol has the cyclic prefix with the time length of 144^{∗}Ts1, where Ts1=1/61440 ms.

Optionally, in this embodiment, a subcarrier spacing corresponding to the OFDM symbols in the uplink basic unit is 2^{m∗}30 kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

Optionally, in this embodiment, the subcarrier spacing corresponding to the symbols in the uplink reference unit is 60 kHz, n₂ has the value of 14, the uplink reference unit has a time length of 0.25 ms, an eighth symbol and a first symbol in the uplink reference unit have the same cyclic prefix with the time length of 160^{∗}Ts2, each of symbols in the uplink reference unit other than the eighth symbol and the first symbol has the cyclic prefix with the time length of 144^{∗}Ts2, where Ts2=1/122880 ms.

Optionally, in this embodiment, a subcarrier spacing corresponding to the OFDM symbols in the uplink basic unit is 2^{m∗}60 kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

In this embodiment, the uplink basic unit has a first timing advance time offset relative to the uplink reference unit, a starting transmission time of the uplink reference unit has a second timing advance time offset relative to a starting transmission time of a downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, where the first timing advance time offset and the second timing advance time offset are both greater than 0.

Optionally, in this embodiment, the uplink reference unit and a subframe of 1 ms in a LTE system using a normal cyclic prefix has a same time length and symbol structure, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or SC-FDMA symbols in the uplink reference unit) - 16^{∗}Ts, where 0<k<14 and k is a positive integer}, where Ts = 1/30720 ms.

Optionally, in this embodiment, the uplink reference unit has a time length of 0.5 ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a half, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or the SC-FDMA symbols in the uplink reference unit) - 16^{∗}Ts1, where 0<k<14 and k is a positive integer}, where Ts1 = 1/61440 ms.

Optionally, in this embodiment, the uplink reference unit has a time length of 0.25ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a quarter, the first timing advance time offset has a value T1 equal to an element in a set C or an element in a subset of the set C, the set C is {x|x= (a time length of first k OFDM symbols or SC-FDMA symbols in the uplink reference unit or a time length of the first k OFDM symbols or the SC-FDMA symbols in the uplink reference unit) - 16^{∗}Ts2, where 0<k<14 and k is a positive integer}, where Ts2=1/122880 ms.

Optionally, in this embodiment, the processor executes, according to the program codes stored in the storage medium, the following steps: determining one or more OFDM symbols for receiving data transmitted by a terminal in an uplink basic unit, a starting transmission time of the uplink basic unit is preset advance time ahead of a starting transmission time of a downlink basic unit, and the preset advance time is determined according to a dynamic timing advance and a timing advance offset; and receiving the data transmitted by the terminal on the determined one or more OFDM symbols.

In this embodiment, the uplink basic unit includes n₁ OFDM symbols, each of first S OFDM symbols of the n₁ OFDM symbols has a cyclic prefix with a first time length, a (S+1)th OFDM symbol has a cyclic prefix with a second time length, and each of at least one OFDM symbol of remaining n₁-S-1 OFDM symbols other than first S+1 OFDM symbols has a cyclic prefix with the second time length, the n₁ OFDM symbols have a same valid data length, the first time length is less than the second time length, S<n₁, and S and n₁ are positive integers.

Alternatively, in this embodiment, the uplink basic unit may include n₁ OFDM symbols, an additional cyclic prefix or an interval exists between a Sth OFDM symbol and a (S+1)th OFDM symbol of the n₁ OFDM symbols, an additional cyclic prefix or an interval exists among remaining n₁-S-1 OFDM symbols other than first S+1 OFDM symbols, where the additional cyclic prefix or the interval between the Sth OFDM symbol and the (S+1)th OFDM symbol is the same as the additional cyclic or the interval among the remaining n₁-S-1 OFDM symbols, the n₁ OFDM symbols have a same cyclic prefix length and a same valid data length, the same cyclic prefix length is a first time length, no information is transmitted or received in the interval, S<n₁, and S and n₁ are positive integers.

Optionally, in this embodiment, the downlink basic unit and the uplink basic unit have a same time length.

Optionally, in this embodiment, the timing advance offset is configured by the base station through the RRC message to the terminal.

Optionally, in this embodiment, the dynamic timing advance is dynamically configured by the base station through a timing advance command of a MAC control element or a timing advance command in a random access response to the terminal.

In this embodiment, a time length of the S OFDM symbols may be a first timing advance time offset of the uplink basic unit relative to the uplink reference unit or a part of the first timing advance time offset of the uplink basic unit relative to the uplink reference unit, the starting transmission time of the uplink reference unit has the second timing advance offset relative to the starting transmission time of the downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, the first timing advance time offset and the second timing advance time offset are both greater than 0.

Optionally, in this embodiment, the uplink reference unit may include n₂ symbols, when the time length of the S OFDM symbols is the part of the first timing advance time offset of the uplink basic unit relative to the uplink reference unit, the first timing advance time offset further includes a time length of first 0.5^{∗}n₂ symbols in the uplink reference unit, where symbols in the uplink reference unit are OFDM symbols or SC-FDMA symbols, n₂=2^{∗}w and w is a positive integer.

Optionally, in this embodiment, the first timing advance time offset may be obtained according to a third timing advance time offset and the second timing advance time offset, the third timing advance time offset is determined according to the timing advance offset and is a part of the preset advance time, the third timing advance time offset is greater than 0 and is less than or equal to the preset advance time.

Optionally, in this embodiment, the subcarrier spacing corresponding to the symbols in the uplink reference unit is 15 kHz, n₂ has the value of 14, the uplink reference unit has a time length of 1 ms, an eighth symbol and a first symbol in the uplink reference unit have the same cyclic prefix with the time length of 160^{∗}Ts, each of symbols in the uplink reference unit other than the eighth symbol and the first symbol has the cyclic prefix with the time length of 144^{∗}Ts, where Ts = 1/30720 ms.

Optionally, in this embodiment, a subcarrier spacing corresponding to the OFDM symbols in the uplink basic unit is 2^{m∗}15kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

Optionally, in this embodiment, the subcarrier spacing corresponding to the symbols in the uplink reference unit is 30 kHz, n₂ has the value of 14, the uplink reference unit has a time length of 0.5 ms, an eighth symbol and a first symbol in the uplink reference unit have the same cyclic prefix with the time length of 160^{∗}Ts1, each of symbols in the uplink reference unit other than the eighth symbol and the first symbol has the cyclic prefix with the time length of 144^{∗}Ts1, where Ts1=1/61440 ms.

Optionally, in this embodiment, a subcarrier spacing corresponding to the OFDM symbols in the uplink basic unit is 2^{m∗}30 kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

Optionally, in this embodiment, the subcarrier spacing corresponding to the symbols in the uplink reference unit is 60 kHz, n₂ has the value of 14, the uplink reference unit has a time length of 0.25 ms, an eighth symbol and a first symbol in the uplink reference unit have the same cyclic prefix with the time length of 160^{∗}Ts2, each of symbols in the uplink reference unit other than the eighth symbol and the first symbol has the cyclic prefix with the time length of 144^{∗}Ts2, where Ts2=1/122880 ms.

Optionally, in this embodiment, a subcarrier spacing corresponding to the OFDM symbols in the uplink basic unit is 2^{m∗}60kHz, a value of n₁ is 14^{∗}2^{m}, the first time length is 144^{∗}2^{-m∗}Ts, a value of S is a positive integer multiple of 2^{m}, and a value of M is at least one of: 0, 1, 2, and 3.

Optionally, in this embodiment, the uplink basic unit has a first timing advance time offset relative to the uplink reference unit, a starting transmission time of the uplink reference unit has a second timing advance time offset relative to a starting transmission time of a downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, where the first timing advance time offset and the second timing advance time offset are both greater than 0.

Optionally, in this embodiment, the uplink reference unit and a subframe of 1 ms in a LTE system using a normal cyclic prefix has a same time length and symbol structure, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or SC-FDMA symbols in the uplink reference unit) - 16^{∗}Ts, where 0<k<14 and k is a positive integer}, where Ts = 1/30720 ms.

Optionally, in this embodiment, the uplink reference unit has a time length of 0.5 ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a half, the first timing advance time offset has a value equal to an element in a set C or an element in a subset of the set C, the set C is {x|x= (a time length of first k OFDM symbols or SC-FDMA symbols in the uplink reference unit or a time length of the first k OFDM symbols or the SC-FDMA symbols in the uplink reference unit) - 16^{∗}Ts1, where 0<k<14 and k is a positive integer}, where Ts1 = 1/61440 ms.

Optionally, in this embodiment, the uplink reference unit has a time length of 0.25ms, a time domain symbol structure of the uplink reference unit is same as a subframe of 1 ms in a LTE system using a normal cyclic prefix in a case where OFDM symbols or SC-FDMA symbols in the subframe of 1 ms are scaled down to a quarter, the first timing advance time offset has a value T1 equal to an element in a set C or an element in a subset of the set C, the set C is {x|x= (a time length of first k OFDM symbols or SC-FDMA symbols in the uplink reference unit or a time length of the first k OFDM symbols or the SC-FDMA symbols in the uplink reference unit) - 16^{∗}Ts2, where 0<k<14 and k is a positive integer}, where Ts2=1/122880 ms.

A processor is further provided by an embodiment of the present invention. The processor is used for executing a program, where, when executed, the program executes the above-mentioned method.

Optionally, for examples in this embodiment, reference may be made to the examples described in the embodiments and optional implementation modes described above, and the examples will not be repeated in this embodiment.

Apparently, it should be understood by those skilled in the art that each of the above-mentioned modules or steps of the present invention may be implemented by a general-purpose computing device, the modules or steps may be concentrated on a single computing device or distributed on a network composed of multiple computing devices, and alternatively, the modules or steps may be implemented by program codes executable by the computing devices, so that the modules or steps may be stored in a storage device and executed by the computing devices. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

## Claims

1. A method for transmitting data, comprising:
determining (402) one or more orthogonal frequency division multiplexing, OFDM,
symbols for transmitting data in an uplink basic unit, wherein a starting transmission time of the uplink basic unit is preset advance time ahead of a starting transmission time of a downlink basic unit, and the preset advance time is determined according to a dynamic timing advance and a timing advance offset; and
transmitting (404) data on the determined one or more OFDM symbols;
**characterised in that** the uplink basic unit comprises n1 OFDM symbols, each of first S OFDM symbols of the n1 OFDM symbols has a cyclic prefix with a first time length, a (S+1)th OFDM symbol has a cyclic prefix with a second time length, and each of at least one OFDM symbol of remaining n1-S-1 OFDM symbols other than first S+1 OFDM symbols has a cyclic prefix with the second time length, wherein the n1 OFDM symbols have a same valid data length, the first time length is less than the second time length, S<n1, and S and n1 are positive integers; or
the uplink basic unit comprises n1 OFDM symbols, an additional cyclic prefix or an interval exists between a Sth OFDM symbol and a (S+1)th OFDM symbol of the n1 OFDM symbols, an additional cyclic prefix or an interval exists among remaining n1-S-1 OFDM symbols other than first S+1 OFDM symbols, wherein the additional cyclic prefix or the interval between the Sth OFDM symbol and the (S+1)th OFDM symbol is the same as the additional cyclic or the interval among the remaining n1-S-1 OFDM symbols, the n1 OFDM symbols have a same cyclic prefix length and a same valid data length, the same cyclic prefix length is a first time length, no information is transmitted or received in the interval, S<n1, and S and n1 are positive integers;
wherein a time length of the S OFDM symbols is a first timing advance time offset of the uplink basic unit relative to an uplink reference unit or a part of the first timing advance time offset of the uplink basic unit relative to the uplink reference unit, wherein a starting transmission time of the uplink reference unit has a second timing advance offset relative to a starting transmission time of a downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length,
wherein the first timing advance time offset and the second timing advance time offset are both greater than 0.

2. The method according to claim 1, wherein the downlink basic unit and the uplink basic unit have a same time length.

3. The method according to claim 1, wherein the timing advance offset is configured by a base station through a radio resource control, RRC, message.

4. The method according to claim 1, wherein the dynamic timing advance is dynamically configured by a base station through a timing advance command of a media access control, MAC, control element or a timing advance command in a random access response.

5. A method for receiving data, comprising:
determining (502) one or more orthogonal frequency division multiplexing, OFDM,
symbols for receiving data transmitted by user equipment, UE,
in an uplink basic unit, wherein a starting transmission time of the uplink basic unit is preset advance time ahead of a starting transmission time of a downlink basic unit, and the preset advance time is determined according to a dynamic timing advance and a timing advance offset; and
receiving (504) the data transmitted by the UE on the determined one or more OFDM symbols;
**characterised in that** the uplink basic unit comprises n1 OFDM symbols,
each of first S OFDM symbols of the n1 OFDM symbols has a cyclic prefix with a first time length, a (S+1)th OFDM symbol has a cyclic prefix with a second time length, and each of at least one OFDM symbol of remaining n1-S-1 OFDM symbols other than first S+1 OFDM symbols has a cyclic prefix with the second time length, wherein the n1 OFDM symbols have a same valid data length, the first time length is less than the second time length, S<n1, and S and n1 are positive integers; or
the uplink basic unit comprises n1 OFDM symbols, an additional cyclic prefix or an interval exists between a Sth OFDM symbol and a (S+1)th OFDM symbol of the n1 OFDM symbols, an additional cyclic prefix or an interval exists among remaining n1-S-1 OFDM symbols other than first S+1 OFDM symbols, wherein the additional cyclic prefix or the interval between the Sth OFDM symbol and the (S+1)th OFDM symbol is the same as the additional cyclic or the interval among the remaining n1-S-1 OFDM symbols, the n1 OFDM symbols have a same cyclic prefix length and a same valid data length, the same cyclic prefix length is a first time length, no information is transmitted or received in the interval, S<n1, and S and n1 are positive integers;
wherein a time length of the S OFDM symbols is a first timing advance time offset of the uplink basic unit relative to an uplink reference unit or a part of the first timing advance time offset of the uplink basic unit relative to the uplink reference unit, wherein a starting transmission time of the uplink reference unit has a second timing advance offset relative to a starting transmission time of a downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, wherein the first timing advance time offset and the second timing advance time offset are both greater than 0.

6. The method according to claim 5, wherein the downlink basic unit and the uplink basic unit have a same time length.

7. The method according to claim 5, wherein the timing advance offset is configured by a base station to the UE through a radio resource control, RRC, message.

8. The method according to claim 5, wherein the dynamic timing advance is dynamically configured by a base station to the UE through a timing advance command of a media access control, MAC, control element or a timing advance command in a random access response.

9. A device for transmitting data, comprising:
a determination module (122), which is configured to determine one or more orthogonal frequency division multiplexing, OFDM, symbols for transmitting data in an uplink basic unit, wherein a starting transmission time of the uplink basic unit is preset advance time ahead of a starting transmission time of a downlink basic unit, and the preset advance time is determined
according to a dynamic timing advance and a timing advance offset; and a transmission module (124), which is configured to transmit data on the determined one or more OFDM symbols;
**characterised in that** the uplink basic unit comprises n1 OFDM symbols, each of first S OFDM symbols of the n1 OFDM symbols has a cyclic prefix with a first time length, a (S+1)th OFDM symbol has a cyclic prefix with a second time length, and each of at least one OFDM symbol of remaining n1-S-1 OFDM symbols other than first S+1 OFDM symbols has a cyclic prefix with the second time length, wherein the n1 OFDM symbols have a same valid data length, the first time length is less than the second time length, S<n1, and S and n1 are positive integers; or
the uplink basic unit comprises n1 OFDM symbols, an additional cyclic prefix or an interval exists between a Sth OFDM symbol and a (S+1)th OFDM symbol of the n1 OFDM symbols, an additional cyclic prefix or
an interval exists among remaining n1-S-1 OFDM symbols other than first S+1 OFDM symbols, wherein the additional cyclic prefix or the interval between the Sth OFDM symbol and the (S+1)th OFDM symbol is the same as the additional cyclic or the interval among the remaining n1-S-1 OFDM symbols, the n1 OFDM symbols have a same cyclic prefix length and a same valid data length, the same cyclic prefix length is a first time length, no information is transmitted or received in the interval, S<n1, and S and n1 are positive integers;
wherein a time length of the S OFDM symbols is a first timing advance time offset of the uplink basic unit relative to an uplink reference unit or a part of the first timing advance time offset of the uplink basic unit relative to the uplink reference unit, wherein a starting transmission time of the uplink reference unit has a second timing advance offset relative to a starting transmission time of a downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, wherein the first timing advance time offset and the second timing advance time offset are both greater than 0.

10. A device for receiving data, comprising:
a determination module (142), which is configured to determine one or more orthogonal
frequency division multiplexing, OFDM, symbols for receiving data transmitted by user equipment, UE, in an uplink basic unit, wherein a starting transmission time of the uplink basic unit is preset advance time ahead of a starting transmission time of a downlink basic unit, and the preset advance time is determined according to a dynamic timing advance and a timing advance offset; and
a receiving module (144), which is configured to receive the data transmitted by the UE on the determined one or more OFDM symbols;
**characterised in that** the uplink basic unit comprises n1 OFDM symbols, each of first S OFDM symbols of the n1 OFDM symbols has a cyclic prefix with a first time length, a (S+1)th OFDM symbol has a cyclic prefix with a second time length, and each of at least one OFDM symbol of remaining n1-S-1 OFDM symbols other than first S+1 OFDM symbols has a cyclic prefix with the second time length, wherein the n1 OFDM symbols have a same valid data length, the first time length is less than the second time length, S<n1, and S and n1 are positive integers; or
the uplink basic unit comprises n1 OFDM symbols, an additional cyclic prefix or an interval exists between a Sth OFDM symbol and a (S+1)th OFDM symbol of the n1 OFDM symbols, an additional cyclic prefix or an interval exists among remaining n1-S-1 OFDM symbols other than first S+1 OFDM symbols, wherein the additional cyclic prefix or the interval between the Sth OFDM symbol and the (S+1)th OFDM symbol is the same as the additional cyclic or the interval among the remaining n1-S-1 OFDM symbols, the n1 OFDM symbols have a same cyclic prefix length and a same valid data length, the same cyclic prefix length is a first time length, no information is transmitted or received in the interval, S<n1, and S and n1 are positive integers; wherein a time length of the S OFDM symbols is a first timing advance time offset of the uplink basic unit relative to an uplink reference unit or a part of the first timing advance time offset of the uplink basic unit relative to the uplink reference unit, wherein a starting transmission time of the uplink reference unit has a second timing advance offset relative to a starting transmission time of a downlink reference unit, the starting transmission time of the downlink reference unit is the same as the starting transmission time of the downlink basic unit, the uplink reference unit and the uplink basic unit have a same time length, the downlink reference unit and the downlink basic unit have a same time length, wherein the first timing advance time offset and the second timing advance time offset are both greater than 0.

## Patentansprüche

1. Verfahren zum Übertragen von Daten, umfassend:
Bestimmen (402) eines oder mehrerer Symbole für orthogonales Frequenzmultiplexing (orthogonal frequency division multiplexing - OFDM) zum Übertragen von Daten in einer Uplink-Basiseinheit, wobei eine Übertragungsstartzeit der Uplink-Basiseinheit eine voreingestellte Vorlaufzeit vor einer Übertragungsstartzeit einer Downlink-Basiseinheit ist und die voreingestellte Vorlaufzeit gemäß einem dynamischen Timing-Vorlauf und einem Timing-Vorlaufversatz bestimmt wird; und
Übertragen (404) von Daten auf dem bestimmten einen oder den bestimmten mehreren OFDM-Symbolen;
**dadurch gekennzeichnet, dass** die Uplink-Basiseinheit n1 OFDM-Symbole umfasst, jedes der ersten S OFDM-Symbole der n1 OFDM-Symbole ein zyklisches Präfix mit einer ersten Zeitlänge aufweist, ein (S+1)-tes OFDM-Symbol ein zyklisches Präfix mit einer zweiten Zeitlänge aufweist und jedes von mindestens einem OFDM-Symbol der verbleibenden n1-S-1 OFDM-Symbole außer den ersten S+1 OFDM-Symbolen ein zyklisches Präfix mit der zweiten Zeitlänge aufweist, wobei die n1 OFDM-Symbole eine gleiche gültige Datenlänge aufweisen, die erste Zeitlänge kleiner als die zweite Zeitlänge ist, S<n₁, und S und n1 positive ganze Zahlen sind; oder
die Uplink-Basiseinheit n1 OFDM-Symbole umfasst, ein zusätzliches zyklisches Präfix oder ein Intervall zwischen einem S-ten OFDM-Symbol und einem (S+1)-ten OFDM-Symbol der n1 OFDM-Symbole vorhanden ist, ein zusätzliches zyklisches Präfix oder
ein Intervall unter den verbleibenden n1-S-1 OFDM-Symbolen außer den ersten S+1 OFDM-Symbolen vorhanden ist, wobei das zusätzliche zyklische Präfix oder das Intervall zwischen dem S-ten OFDM-Symbol und dem (S+1)-ten OFDM-Symbol das gleiche wie das zusätzliche zyklische oder das Intervall unter den verbleibenden n1-S-1 OFDM-Symbolen ist, die n1 OFDM-Symbole eine gleiche Länge des zyklischen Präfix und eine gleiche gültige Datenlänge aufweisen, die gleiche Länge des zyklischen Präfix eine erste Zeitlänge ist, keine Informationen in dem Intervall, S<n₁, übertragen oder empfangen werden und S und n1 positive ganze Zahlen sind;
wobei eine Zeitlänge der S OFDM-Symbole ein erster Timing-Vorlaufzeitversatz der Uplink-Basiseinheit relativ zu einer Uplink-Referenzeinheit oder ein Teil des ersten Timing-Vorlaufzeitversatzes der Uplink-Basiseinheit relativ zu der Uplink-Referenzeinheit ist, wobei eine Übertragungsstartzeit der Uplink-Referenzeinheit einen zweiten Timing-Vorlaufversatz relativ zu einer Übertragungsstartzeit einer Downlink-Referenzeinheit aufweist, die Übertragungsstartzeit der Downlink-Referenzeinheit die gleiche wie die Übertragungsstartzeit der Downlink-Basiseinheit ist, die Uplink-Referenzeinheit und die Uplink-Basiseinheit eine gleiche Zeitlänge aufweisen, die Downlink-Referenzeinheit und die Downlink-Basiseinheit eine gleiche Zeitlänge aufweisen, wobei der erste Timing-Vorlaufzeitversatz und der zweite Timing-Vorlaufzeitversatz beide größer als 0 sind.

2. Verfahren nach Anspruch 1, wobei die Downlink-Basiseinheit und die Uplink-Basiseinheit eine gleiche Zeitlänge aufweisen.

3. Verfahren nach Anspruch 1, wobei der Timing-Vorlaufversatz durch eine Basisstation durch eine Nachricht zur Funkressourcensteuerung (radio resource control - RRC) konfiguriert wird.

4. Verfahren nach Anspruch 1, wobei der dynamische Timing-Vorlauf durch eine Basisstation durch einen Timing-Vorlaufbefehl eines Steuerelements zur Medienzugriffssteuerung (media access control - MAC) oder einen Timing-Vorlaufbefehl in einer Direktzugriffsantwort dynamisch konfiguriert wird.

5. Verfahren zum Empfangen von Daten, umfassend:
Bestimmen (502) eines oder mehrerer Symbole für orthogonales Frequenzmultiplexing (OFDM) zum Empfangen von Daten, die durch ein Benutzergerät (user equipment - UE) übertragen werden, in einer Uplink-Basiseinheit, wobei eine Übertragungsstartzeit der Uplink-Basiseinheit eine voreingestellte Vorlaufzeit vor einer Übertragungsstartzeit einer Downlink-Basiseinheit ist und die voreingestellte Vorlaufzeit gemäß einem dynamischen Timing-Vorlauf und einem Timing-Vorlaufversatz bestimmt wird; und
Empfangen (504) der Daten, die durch das UE auf dem bestimmten einen oder den bestimmten mehreren OFDM-Symbolen übertragen werden;
**dadurch gekennzeichnet, dass** die Uplink-Basiseinheit n1 OFDM-Symbole umfasst, jedes der ersten S OFDM-Symbole der n1 OFDM-Symbole ein zyklisches Präfix mit einer ersten Zeitlänge aufweist, ein (S+1)-tes OFDM-Symbol ein zyklisches Präfix mit einer zweiten Zeitlänge aufweist und jedes von mindestens einem OFDM-Symbol der verbleibenden n1-S-1 OFDM-Symbole außer den ersten S+1 OFDM-Symbolen ein zyklisches Präfix mit der zweiten Zeitlänge aufweist, wobei die n1 OFDM-Symbole eine gleiche gültige Datenlänge aufweisen, die erste Zeitlänge kleiner als die zweite Zeitlänge ist, S<n1, und S und n1 positive ganze Zahlen sind; oder
die Uplink-Basiseinheit n1 OFDM-Symbole umfasst, ein zusätzliches zyklisches Präfix oder ein Intervall zwischen einem S-ten OFDM-Symbol und einem (S+1)-ten OFDM-Symbol der n1 OFDM-Symbole vorhanden ist, ein zusätzliches zyklisches Präfix oder
ein Intervall unter den verbleibenden n1-S-1 OFDM-Symbolen außer den ersten S+1 OFDM-Symbolen vorhanden ist, wobei das zusätzliche zyklische Präfix oder das Intervall zwischen dem S-ten OFDM-Symbol und dem (S+1)-ten OFDM-Symbol das gleiche wie das zusätzliche zyklische oder das Intervall unter den verbleibenden n1-S-1 OFDM-Symbolen ist, die n1 OFDM-Symbole eine gleiche Länge des zyklischen Präfix und eine gleiche gültige Datenlänge aufweisen, die gleiche Länge des zyklischen Präfix eine erste Zeitlänge ist, keine Informationen in dem Intervall, S<n1, übertragen oder empfangen werden und S und n1 positive ganze Zahlen sind;
wobei eine Zeitlänge der S OFDM-Symbole ein erster Timing-Vorlaufzeitversatz der Uplink-Basiseinheit relativ zu einer Uplink-Referenzeinheit oder ein Teil des ersten Timing-Vorlaufzeitversatzes der Uplink-Basiseinheit relativ zu der Uplink-Referenzeinheit ist, wobei eine Übertragungsstartzeit der Uplink-Referenzeinheit einen zweiten Timing-Vorlaufversatz relativ zu einer Übertragungsstartzeit einer Downlink-Referenzeinheit aufweist, die Übertragungsstartzeit der Downlink-Referenzeinheit die gleiche wie die Übertragungsstartzeit der Downlink-Basiseinheit ist, die Uplink-Referenzeinheit und die Uplink-Basiseinheit eine gleiche Zeitlänge aufweisen, die Downlink-Referenzeinheit und die Downlink-Basiseinheit eine gleiche Zeitlänge aufweisen,
wobei der erste Timing-Vorlaufzeitversatz und der zweite Timing-Vorlaufzeitversatz beide größer als 0 sind.

6. Verfahren nach Anspruch 5, wobei die Downlink-Basiseinheit und die Uplink-Basiseinheit eine gleiche Zeitlänge aufweisen.

7. Verfahren nach Anspruch 5, wobei der Timing-Vorlaufversatz durch eine Basisstation durch eine Nachricht zur Funkressourcensteuerung (RRC) an das UE konfiguriert wird.

8. Verfahren nach Anspruch 5, wobei der dynamische Timing-Vorlauf durch eine Basisstation durch einen Timing-Vorlaufbefehl eines Steuerelements zur Medienzugriffssteuerung (MAC) oder einen Timing-Vorlaufbefehl in einer Direktzugriffsantwort an das UE dynamisch konfiguriert wird.

9. Vorrichtung zum Übertragen von Daten, umfassend:
ein Bestimmungsmodul (122), das dazu konfiguriert ist, ein oder mehrere Symbole für orthogonales Frequenzmultiplexing (OFDM) zum Übertragen von Daten in einer Uplink-Basiseinheit zu bestimmen, wobei eine Übertragungsstartzeit der Uplink-Basiseinheit eine voreingestellte Vorlaufzeit vor einer Übertragungsstartzeit einer Downlink-Basiseinheit ist und die voreingestellte Vorlaufzeit gemäß einem dynamischen Timing-Vorlauf und einem Timing-Vorlaufversatz bestimmt wird; und ein Übertragungsmodul (124), das dazu konfiguriert ist, Daten auf dem bestimmten einen oder den bestimmten mehreren OFDM-Symbolen zu übertragen;
**dadurch gekennzeichnet, dass** die Uplink-Basiseinheit n1 OFDM-Symbole umfasst, jedes der ersten S OFDM-Symbole der n1 OFDM-Symbole ein zyklisches Präfix mit einer ersten Zeitlänge aufweist, ein (S+1)-tes OFDM-Symbol ein zyklisches Präfix mit einer zweiten Zeitlänge aufweist und jedes von mindestens einem OFDM-Symbol der verbleibenden n1-S-1 OFDM-Symbole außer den ersten S+1 OFDM-Symbolen ein zyklisches Präfix mit der zweiten Zeitlänge aufweist, wobei die n1 OFDM-Symbole eine gleiche gültige Datenlänge aufweisen, die erste Zeitlänge kleiner als die zweite Zeitlänge ist, S<n1, und S und n1 positive ganze Zahlen sind; oder
die Uplink-Basiseinheit n1 OFDM-Symbole umfasst, ein zusätzliches zyklisches Präfix oder ein Intervall zwischen einem S-ten OFDM-Symbol und einem (S+1)-ten OFDM-Symbol der n1 OFDM-Symbole vorhanden ist, ein zusätzliches zyklisches Präfix oder ein Intervall unter den verbleibenden n1-S-1 OFDM-Symbolen außer den ersten S+1 OFDM-Symbolen vorhanden ist, wobei das zusätzliche zyklische Präfix oder das Intervall zwischen dem S-ten OFDM-Symbol und dem (S+1)-ten OFDM-Symbol das gleiche wie das zusätzliche zyklische oder das Intervall unter den verbleibenden n1-S-1 OFDM-Symbolen ist, die n1 OFDM-Symbole eine gleiche Länge des zyklischen Präfix und eine gleiche gültige Datenlänge aufweisen, die gleiche Länge des zyklischen Präfix eine erste Zeitlänge ist, keine Informationen in dem Intervall, S<n1, übertragen oder empfangen werden und S und n1 positive ganze Zahlen sind;
wobei eine Zeitlänge der S OFDM-Symbole ein erster Timing-Vorlaufzeitversatz der Uplink-Basiseinheit relativ zu einer Uplink-Referenzeinheit oder ein Teil des ersten Timing-Vorlaufzeitversatzes der Uplink-Basiseinheit relativ zu der Uplink-Referenzeinheit ist, wobei eine Übertragungsstartzeit der Uplink-Referenzeinheit einen zweiten Timing-Vorlaufversatz relativ zu einer Übertragungsstartzeit einer Downlink-Referenzeinheit aufweist, die Übertragungsstartzeit der Downlink-Referenzeinheit die gleiche wie die Übertragungsstartzeit der Downlink-Basiseinheit ist, die Uplink-Referenzeinheit und die Uplink-Basiseinheit eine gleiche Zeitlänge aufweisen, die Downlink-Referenzeinheit und die Downlink-Basiseinheit eine gleiche Zeitlänge aufweisen, wobei der erste Timing-Vorlaufzeitversatz und der zweite Timing-Vorlaufzeitversatz beide größer als 0 sind.

10. Vorrichtung zum Empfangen von Daten, umfassend:
ein Bestimmungsmodul (142), das dazu konfiguriert ist, ein oder mehrere Symbole für orthogonales Frequenzmultiplexing (OFDM) zum Empfangen von Daten, die durch ein Benutzergerät (UE) übertragen werden, in einer Uplink-Basiseinheit zu bestimmen, wobei eine Übertragungsstartzeit der Uplink-Basiseinheit eine voreingestellte Vorlaufzeit vor einer Übertragungsstartzeit einer Downlink-Basiseinheit ist und die voreingestellte Vorlaufzeit gemäß einem dynamischen Timing-Vorlauf und einem Timing-Vorlaufversatz bestimmt wird; und
ein Empfangsmodul (144), das dazu konfiguriert ist, die durch das UE auf dem bestimmten einen oder den bestimmten mehreren OFDM-Symbolen übertragenen Daten zu empfangen; **dadurch gekennzeichnet, dass** die Uplink-Basiseinheit n1 OFDM-Symbole umfasst, jedes der ersten S OFDM-Symbole der n1 OFDM-Symbole ein zyklisches Präfix mit einer ersten Zeitlänge aufweist, ein (S+1)-tes OFDM-Symbol ein zyklisches Präfix mit einer zweiten Zeitlänge aufweist und jedes von mindestens einem OFDM-Symbol der verbleibenden n1-S-1 OFDM-Symbole außer den ersten S+1 OFDM-Symbolen ein zyklisches Präfix mit der zweiten Zeitlänge aufweist, wobei die n1 OFDM-Symbole eine gleiche gültige Datenlänge aufweisen, die erste Zeitlänge kleiner als die zweite Zeitlänge ist, S<n1, und S und n1 positive ganze Zahlen sind;
oder
die Uplink-Basiseinheit n1 OFDM-Symbole umfasst, ein zusätzliches zyklisches Präfix oder ein Intervall zwischen einem S-ten OFDM-Symbol und einem (S+1)-ten OFDM-Symbol der n1 OFDM-Symbole vorhanden ist, ein zusätzliches zyklisches Präfix oder ein Intervall unter den verbleibenden n1-S-1 OFDM-Symbolen außer den ersten S+1 OFDM-Symbolen vorhanden ist, wobei das zusätzliche zyklische Präfix oder das Intervall zwischen dem S-ten OFDM-Symbol und dem (S+1)-ten OFDM-Symbol das gleiche wie das zusätzliche zyklische oder das Intervall unter den verbleibenden n1-S-1 OFDM-Symbolen ist, die n1 OFDM-Symbole eine gleiche Länge des zyklischen Präfix und eine gleiche gültige Datenlänge aufweisen, die gleiche Länge des zyklischen Präfix eine erste Zeitlänge ist, keine Informationen in dem Intervall, S<n1, übertragen oder empfangen werden und S und n1 positive ganze Zahlen sind; wobei eine Zeitlänge der S OFDM-Symbole ein erster Timing-Vorlaufzeitversatz der Uplink-Basiseinheit relativ zu einer Uplink-Referenzeinheit oder ein Teil des ersten Timing-Vorlaufzeitversatzes der Uplink-Basiseinheit relativ zu der Uplink-Referenzeinheit ist, wobei eine Übertragungsstartzeit der Uplink-Referenzeinheit einen zweiten Timing-Vorlaufversatz relativ zu einer Übertragungsstartzeit einer Downlink-Referenzeinheit aufweist, die Übertragungsstartzeit der Downlink-Referenzeinheit die gleiche wie die Übertragungsstartzeit der Downlink-Basiseinheit ist, die Uplink-Referenzeinheit und die Uplink-Basiseinheit eine gleiche Zeitlänge aufweisen, die Downlink-Referenzeinheit und die Downlink-Basiseinheit eine gleiche Zeitlänge aufweisen, wobei der erste Timing-Vorlaufzeitversatz und der zweite Timing-Vorlaufzeitversatz beide größer als 0 sind.

## Revendications

1. Procédé de transmission de données, comprenant :
la détermination (402) d'un ou de plusieurs symboles de multiplexage par répartition orthogonale de la fréquence, OFDM, pour transmettre des données dans une unité de base de liaison montante, dans lequel un temps de transmission de début de l'unité de base de liaison montante est un temps d'avance prédéfini avant un temps de transmission de début d'une unité de base de liaison descendante, et le temps d'avance prédéfini est déterminé selon une avance temporelle dynamique et un décalage d'avance de synchronisation ; et
la transmission (404) de données sur les un ou plusieurs symboles OFDM déterminés ;
**caractérisé en ce que** l'unité de base de liaison montante comprend n1 symboles OFDM, chacun des S premiers symboles OFDM des n1 symboles OFDM a un préfixe cyclique avec une première durée, un (S+1)ième symbole OFDM a un préfixe cyclique avec une seconde durée, et chacun d'au moins un symbole OFDM parmi les n1-S-1 symboles OFDM restants autres que les premiers S+1 symboles OFDM ont un préfixe cyclique avec la seconde durée, dans lequel les n1 symboles OFDM ont une même longueur de données valides, la première durée est inférieure à la seconde durée, S < n1, et S et n1 sont des entiers positifs ; ou
l'unité de base de liaison montante comprend n1 symboles OFDM, un préfixe cyclique supplémentaire ou un intervalle existe entre un Sième symbole OFDM et un (S+1)ième symbole OFDM des n1 symboles OFDM, un préfixe cyclique supplémentaire ou un intervalle existe parmi les n1-S-1 symboles OFDM restants autres que les premiers S+1 symboles OFDM, dans lequel le préfixe cyclique supplémentaire ou l'intervalle entre le Sième symbole OFDM et le (S+1)ième symbole OFDM est le même que le cyclique supplémentaire ou l'intervalle parmi les n1-S-1 symboles OFDM restants, les n1 symboles OFDM ont une même longueur de préfixe cyclique et une même longueur de données valides, la même longueur de préfixe cyclique est une première durée, aucune information n'est transmise ou reçue dans l'intervalle, S < n1, et S et n1 sont des entiers positifs ;
dans lequel une durée des S symboles OFDM est un premier décalage temporel d'avance de synchronisation de l'unité de base de liaison montante par rapport à une unité de référence de liaison montante ou une partie du premier décalage temporel d'avance de synchronisation de l'unité de base de liaison montante par rapport à l'unité de référence de liaison montante, dans lequel un temps de transmission de début de l'unité de référence de liaison montante a un second décalage d'avance de synchronisation par rapport à un temps de transmission de début d'une unité de référence de liaison descendante, le temps de transmission de début de l'unité de référence de liaison descendante est le même que le temps de transmission de début de l'unité de base de liaison descendante, l'unité de référence de liaison montante et l'unité de base de liaison montante ont une même durée, l'unité de référence de liaison descendante et l'unité de base de liaison descendante ont une même durée, dans lequel le premier décalage temporel d'avance de synchronisation et le second décalage temporel d'avance de synchronisation sont tous deux supérieurs à 0.

2. Procédé selon la revendication 1, dans lequel l'unité de base de liaison descendante et l'unité de base de liaison montante ont une même durée.

3. Procédé selon la revendication 1, dans lequel le décalage d'avance de synchronisation est configuré par une station de base via un message de commande de ressource radio, RRC.

4. Procédé selon la revendication 1, dans lequel l'avance de synchronisation dynamique est configurée dynamiquement par une station de base via une commande d'avance de synchronisation d'un élément de commande de contrôle d'accès au support, MAC, ou une commande d'avance de synchronisation dans une réponse d'accès aléatoire.

5. Procédé de réception de données, comprenant :
la détermination (502) d'un ou de plusieurs symboles de multiplexage par répartition orthogonale de la fréquence, OFDM, pour recevoir des données transmises par un équipement utilisateur, UE, dans une unité de base de liaison montante, dans lequel un temps de transmission de début de l'unité de base de liaison montante est un temps d'avance prédéfini avant un temps transmission de début d'une unité de base de liaison descendante, et le temps d'avance prédéfini est déterminé selon une avance de synchronisation dynamique et un décalage d'avance de synchronisation ; et
la réception (504) des données transmises par l'UE sur les un ou plusieurs symboles OFDM déterminés ;
**caractérisé en ce que** l'unité de base de liaison montante comprend n1 symboles OFDM, chacun des S premiers symboles OFDM des n1 symboles OFDM a un préfixe cyclique avec une première durée, un (S+1)ième symbole OFDM a un préfixe cyclique avec une seconde durée, et chacun d'au moins un symbole OFDM parmi les n1-S-1 symboles OFDM restants autres que les premiers S+1 symboles OFDM ont un préfixe cyclique avec la seconde durée, dans lequel les n1 symboles OFDM ont une même longueur de données valides, la première durée est inférieure à la seconde durée, S < n1, et S et n1 sont des entiers positifs ; ou
l'unité de base de liaison montante comprend n1 symboles OFDM, un préfixe cyclique supplémentaire ou un intervalle existe entre un Sième symbole OFDM et un (S+1)ième symbole OFDM des n1 symboles OFDM, un préfixe cyclique supplémentaire ou un intervalle existe parmi les n1-S-1 symboles OFDM restants autres que les premiers S+1 symboles OFDM, dans lequel le préfixe cyclique supplémentaire ou l'intervalle entre le Sième symbole OFDM et le (S+1)ième symbole OFDM est le même que le cyclique supplémentaire ou l'intervalle parmi les n1-S-1 symboles OFDM restants, les n1 symboles OFDM ont une même longueur de préfixe cyclique et une même longueur de données valides, la même longueur de préfixe cyclique est une première durée, aucune information n'est transmise ou reçue dans l'intervalle, S < n1, et S et n1 sont des entiers positifs ;
dans lequel une durée des S symboles OFDM est un premier décalage temporel d'avance de synchronisation de l'unité de base de liaison montante par rapport à une unité de référence de liaison montante ou une partie du premier décalage temporel d'avance de synchronisation de l'unité de base de liaison montante par rapport à l'unité de référence de liaison montante, dans lequel un temps de transmission de début de l'unité de référence de liaison montante a un second décalage d'avance de synchronisation par rapport à un temps de transmission de début d'une unité de référence de liaison descendante, le temps de transmission de début de l'unité de référence de liaison descendante est le même que le temps de transmission de début de l'unité de base de liaison descendante, l'unité de référence de liaison montante et l'unité de base de liaison montante ont une même durée, l'unité de référence de liaison descendante et
l'unité de base de liaison descendante ont une même durée,
dans lequel le premier décalage temporel d'avance de synchronisation et le second décalage temporel d'avance de synchronisation sont tous deux supérieurs à 0.

6. Procédé selon la revendication 5, dans lequel l'unité de base de liaison descendante et l'unité de base de liaison montante ont une même durée.

7. Procédé selon la revendication 5, dans lequel le décalage d'avance de synchronisation est configuré par une station de base vers l'UE via un message de commande de ressource radio, RRC.

8. Procédé selon la revendication 5, dans lequel l'avance de synchronisation dynamique est configurée dynamiquement par une station de base vers l'UE via une commande d'avance de synchronisation d'un élément de commande de contrôle d'accès au support, MAC, ou une commande d'avance de synchronisation dans une réponse d'accès aléatoire.

9. Dispositif de transmission de données, comprenant :
un module de détermination (122), qui est configuré pour déterminer un ou plusieurs symboles de multiplexage par répartition orthogonale de la fréquence, OFDM, pour transmettre des données dans une unité de base de liaison montante, dans lequel un temps de transmission de début de l'unité de base de liaison montante est un temps d'avance prédéfini avant un temps de transmission de début d'une unité de base de liaison descendante, et le temps d'avance prédéfini est déterminé selon une avance de synchronisation dynamique et un décalage d'avance de synchronisation ; et un module de transmission (124), qui est configuré pour transmettre des données sur les un ou plusieurs symboles OFDM déterminés ;
**caractérisé en ce que** l'unité de base de liaison montante comprend n1 symboles OFDM, chacun des S premiers symboles OFDM des n1 symboles OFDM a un préfixe cyclique avec une première durée, un (S+1)ième symbole OFDM a un préfixe cyclique avec une seconde durée, et chacun d'au moins un symbole OFDM parmi les n1-S-1 symboles OFDM restants autres que les premiers S+1 symboles OFDM ont un préfixe cyclique avec la seconde durée, dans lequel les n1 symboles OFDM ont une même longueur de données valides, la première durée est inférieure à la seconde durée, S < n1, et S et n1 sont des entiers positifs ; ou
l'unité de base de liaison montante comprend n1 symboles OFDM, un préfixe cyclique supplémentaire ou un intervalle existe entre un Sième symbole OFDM et un (S+1)ième symbole OFDM des n1 symboles OFDM, un préfixe cyclique supplémentaire ou un intervalle existe parmi les n1-S-1 symboles OFDM restants autres que les premiers S+1 symboles OFDM, dans lequel le préfixe cyclique supplémentaire ou l'intervalle entre le Sième symbole OFDM et le (S+1)ième symbole OFDM est le même que le cyclique supplémentaire ou l'intervalle parmi les n1-S-1 symboles OFDM restants, les n1 symboles OFDM ont une même longueur de préfixe cyclique et une même longueur de données valides, la même longueur de préfixe cyclique est une première durée, aucune information n'est transmise ou reçue dans l'intervalle, S < n1, et S et n1 sont des entiers positifs ;
dans lequel une durée des S symboles OFDM est un premier décalage temporel d'avance de synchronisation de l'unité de base de liaison montante par rapport à une unité de référence de liaison montante ou une partie du premier décalage temporel d'avance de synchronisation de l'unité de base de liaison montante par rapport à l'unité de référence de liaison montante, dans lequel un temps de transmission de début de l'unité de référence de liaison montante a un second décalage d'avance de synchronisation par rapport à un temps de transmission de début d'une unité de référence de liaison descendante, le temps de transmission de début de l'unité de référence de liaison descendante est le même que le temps de transmission de début de l'unité de base de liaison descendante, l'unité de référence de liaison montante et l'unité de base de liaison montante ont une même durée, l'unité de référence de liaison descendante et l'unité de base de liaison descendante ont une même durée, dans lequel le premier décalage temporel d'avance de synchronisation et le second décalage temporel d'avance de synchronisation sont tous deux supérieurs à 0.

10. Dispositif de réception de données, comprenant :
un module de détermination (142), qui est configuré pour déterminer un ou plusieurs symboles de multiplexage par répartition orthogonale de la fréquence, OFDM, pour recevoir des données transmises par un équipement utilisateur, UE, dans une unité de base de liaison montante, dans lequel un temps de transmission de début de l'unité de base de liaison montante est un temps d'avance prédéfini avant un temps transmission de début d'une unité de base de liaison descendante, et le temps d'avance prédéfini est déterminé selon une avance de synchronisation dynamique et un décalage d'avance de synchronisation ; et
un module de réception (144), qui est configuré pour recevoir les données transmises par l'UE sur les un ou plusieurs symboles OFDM déterminés ;
**caractérisé en ce que** l'unité de base de liaison montante comprend n1 symboles OFDM, chacun des S premiers symboles OFDM des n1 symboles OFDM a un préfixe cyclique avec une première durée, un (S+1)ième symbole OFDM a un préfixe cyclique avec une seconde durée, et chacun d'au moins un symbole OFDM parmi les n1-S-1 symboles OFDM restants autres que les premiers S+1 symboles OFDM ont un préfixe cyclique avec la seconde durée,
dans lequel les n1 symboles OFDM ont une même longueur de données valides, la première durée est inférieure à la seconde durée, S < n1, et S et n1 sont des entiers positifs ; ou
l'unité de base de liaison montante comprend n1 symboles OFDM, un préfixe cyclique supplémentaire ou un intervalle existe entre un Sième symbole OFDM et un (S+1)ième symbole OFDM des n1 symboles OFDM, un préfixe cyclique supplémentaire ou un intervalle existe parmi les n1-S-1 symboles OFDM restants autres que les premiers S+1 symboles OFDM, dans lequel le préfixe cyclique supplémentaire ou l'intervalle entre le Sième symbole OFDM et le (S+1)ième symbole OFDM est le même que le cyclique supplémentaire ou l'intervalle parmi les n1-S-1 symboles OFDM restants, les n1 symboles OFDM ont une même longueur de préfixe cyclique et une même longueur de données valides, la même longueur de préfixe cyclique est une première durée, aucune information n'est transmise ou reçue dans l'intervalle, S < n1, et S et n1 sont des entiers positifs ; dans lequel une durée des S symboles OFDM est un premier décalage temporel d'avance de synchronisation de l'unité de base de liaison montante par rapport à une unité de référence de liaison montante ou une partie du premier décalage temporel d'avance de synchronisation de l'unité de base de liaison montante par rapport à l'unité de référence de liaison montante, dans lequel un temps de transmission de début de l'unité de référence de liaison montante a un second décalage d'avance de synchronisation par rapport à un temps de transmission de début d'une unité de référence de liaison descendante, le temps de transmission de début de l'unité de référence de liaison descendante est le même que le temps de transmission de début de l'unité de base de liaison descendante, l'unité de référence de liaison montante et l'unité de base de liaison montante ont une même durée, l'unité de référence de liaison descendante et l'unité de base de liaison descendante ont une même durée, dans lequel le premier décalage temporel d'avance de synchronisation et le second décalage temporel d'avance de synchronisation sont tous deux supérieurs à 0.
